# FASCICULE DE BREVET EUROPEEN

(11) **EP 1 664 896 B1**
(45) Date de publication et mention de la délivrance du brevet: **14.11.2007**
(21) Numéro de dépôt: 04787320.3
(22) Date de dépôt: 07.09.2004
(51) Int. Cl.: G02B 26/08

(54) **MICRO-MIROIR OU MICRO-LENTILLE ACTIONNABLE ELECTRIQUEMENT EN ROTATION**
ELEKTRISCH DREHBARER MIKROSPIEGEL ODER MIKROLINSE
ELECTRICALLY ROTATABLE MICROMIRROR OR MICROLENS

(30) Priorité: 08.09.2003 FR 0350508
(43) Date de publication de la demande: 07.06.2006
(73) Titulaire: COMMISSARIAT A L'ENERGIE ATOMIQUE, 75015 Paris (FR)
(72) Inventeur: FILHOL, Fabien, 2201NW Noordwijk ZH (NL); DIVOUX, Claire, F-38000 Grenoble (FR)
(74) Mandataire: Poulin, Gérard
(86) Numéro de dépôt international: PCT/FR2004/002265
(87) Numéro de publication internationale: WO 2005/026814

(56) Documents cités:
- EP-A- 1 193 528
- US-A- 6 115 231
- US-B1- 6 735 004
- SCHWARTZ W ET AL: "A MICROMACHINED DEFORMABLE MIRROR FOR ADAPTIVE OPTICS" PROCEEDINGS OF THE SPIE, SPIE, BELLINGHAM, VA, US, vol. 4983, 2003, pages 230-241, XP009028067 ISSN: 0277-786X cité dans la demande

## Description

### DOMAINE TECHNIQUE

La présente invention concerne un micro-miroir ou une micro-lentille actionnable électriquement en rotation. Les micro-miroirs et les micro-lentilles issus des techniques de micro-usinage de matériau semi-conducteur présentent un grand intérêt pour la réflexion ou la transmission d'un faisceau lumineux grâce à la combinaison de leur rapidité, de leur précision, de leur faible consommation énergétique et de leur coût relativement faible.

De tels micro-miroirs ou micro-lentilles peuvent fonctionner dans deux modes différents qui sont le mode statique ou quasi statique et le mode oscillant. Les micro-miroirs comportent une partie mobile, généralement en forme de plateau, dotée d'une zone réfléchissante. Les micro-lentilles comportent une partie mobile ajourée (c'est à dire en forme de cadre) sur laquelle est fixée une pièce lenticulaire réfringente formant une zone réfringente.

Dans le premier mode, la partie mobile peut prendre des positions dans lesquelles elle est inclinée avec un angle fixe par rapport à une position de repos ou elle peut se déplacer en rotation, son mouvement ayant une fréquence très petite devant sa fréquence de résonance. Dans ce premier mode le faisceau lumineux réfléchi ou transmis selon qu'il s'agit d'un micro-miroir ou d'une micro-lentille est pointé vers un dispositif utilisateur et le domaine d'application est par exemple les systèmes de routage optique ou les systèmes de projection d'image.

Dans le second mode de fonctionnement, la partie mobile oscille à sa fréquence de résonance, le faisceau lumineux réfléchi ou transmis réalise un balayage périodique avec une amplitude augmentée par le phénomène de résonance mécanique. Le domaine d'application est par exemple les scanners dans les imprimantes ou les lecteurs de codes-barres. Dans ce mode de fonctionnement, les micro-miroirs peuvent également être utilisés dans de nouvelles applications telles les affichages par balayage de faisceau lumineux sur la rétine ou les microscopes confocaux endoscopiques.

### ÉTAT DE LA TECHNIQUE ANTÉRIEURE

De tels micro-miroirs ou micro-lentilles comportent classiquement une partie mobile, généralement en forme de plateau, dotée d'un plan principal et possédant au moins une zone réfléchissante pour le micro-miroir et une zone réfringente pour la micro-lentille, une partie fixe, des moyens de liaison de la partie mobile à la partie fixe matérialisant un axe sensiblement parallèle au plan principal, des moyens de commande électrique de la rotation de la partie mobile autour de l'axe.

La qualité optique des micro-miroirs dépend essentiellement de la planéité de leur zone réfléchissante. Celle des micro-lentilles dépend de la précision de la forme de la lentille, forme proche d'une sphère par exemple.

La partie mobile des micro-miroirs comporte généralement un plateau micro-usiné en matériau semi-conducteur formant la zone réfléchissante ou recouvert d'au moins une couche réfléchissante et éventuellement d'une couche de protection. Pour les micro-lentilles, la partie mobile comporte un plateau ajouré soutenant une pièce réfringente lenticulaire. Les déformations de surface peuvent être induites par des éléments se trouvant sous la zone réfléchissante ou sous le plateau ajouré soutenant la pièce lenticulaire. Ces éléments, comme des électrodes, sont bien souvent utilisés pour engendrer le déplacement de la partie mobile, les contraintes dans la ou les couches superficielles de la partie mobile (par exemple la couche métallique réfléchissante ou la couche de protection) et les déformations dynamiques qui se produisent pendant le déplacement de la partie mobile.

L'utilisation du silicium monocristallin d'épaisseur de quelques dizaines de micromètres permet d'obtenir des parties mobiles ayant une planéité satisfaisante. Une telle gamme d'épaisseurs permet d'éviter les déformations engendrées par une accélération lors d'un mouvement ou par les contraintes apportées par la ou les couches superficielles.

La taille de la zone réfléchissante doit être suffisante pour limiter l'effet de diffraction du faisceau lumineux sur son ouverture. On utilise typiquement des micro-miroirs de plus de 500 micromètres d'envergure. Bien sûr de telles dimensions ne sont pas limitatives, elles dépendent en fait de l'application. Ces contraintes sur les dimensions sont applicables aux micro-lentilles.

Ces micro-miroirs ou ces micro-lentilles sont donc destinés à se déplacer en rotation autour d'un axe sensiblement parallèle à leur plan principal. Deux ou plusieurs micro-miroirs peuvent être utilisés dans un même montage pour défléchir plusieurs fois le faisceau lumineux. Les mêmes remarques s'appliquent aux micro-lentilles.

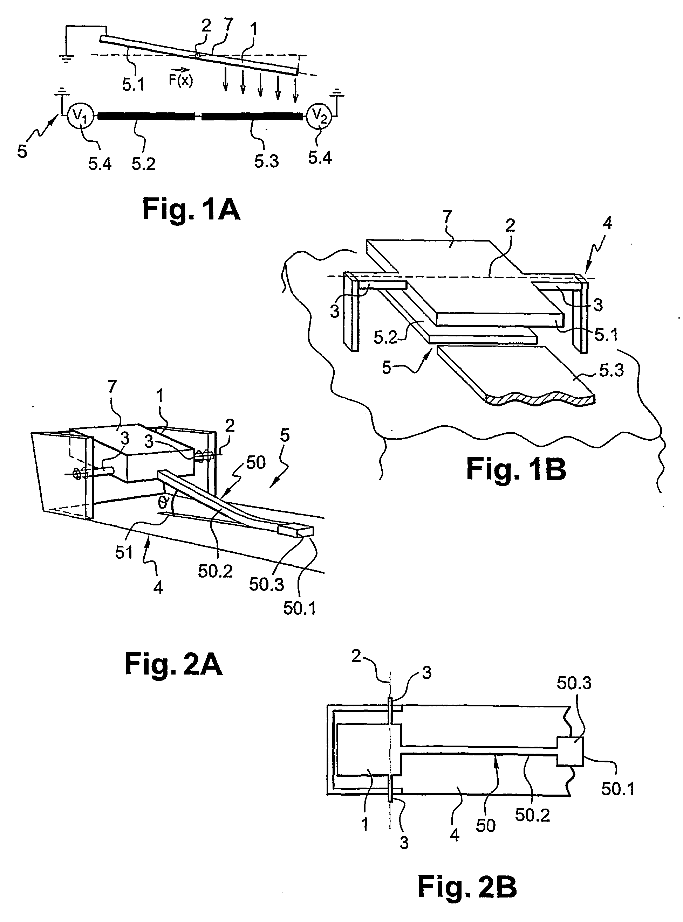

On connaît des micro-miroirs actionnables en rotation par effet électrostatique comme celui illustré aux figures 1A, 1B. La partie mobile 1 est montée sur un axe de rotation 2 matérialisé par deux bras de torsion 3 alignés issus de la partie mobile 1 et dont les extrémités sont solidaires d'une partie fixe 4. La partie mobile 1 fait face à la partie fixe 4 tout en étant à distance en position de repos, elle est matérialisée par les pointillés sur la figure 1A. Elle est suspendue au-dessus de la partie fixe 4 par les bras de torsion 3. Des moyens de commande électrique 5 pour déplacer en rotation la partie mobile 1 sont prévus. Ils comportent une électrode mobile 5.1 et deux contre-électrodes fixes 5.2. La face de la partie mobile 1 qui se trouve face à la partie fixe 4 porte l'électrode mobile 5.1. L'autre face de la partie mobile 1 porte une zone réfléchissante 7. La partie fixe 4 porte les deux contre-électrodes 5.2, 5.2 qui font face à l'électrode mobile 5.1. Les moyens 5 pour commander le déplacement en rotation de la partie mobile 1 comportent également des moyens 5.4 d'adressage (matérialisés par des sources de tension) pour appliquer un signal d'adressage sous la forme d'une tension d'actionnement V1 ou V2 entre l'électrode mobile 5.1 et l'une ou l'autre des contre-électrodes 5.2, 5.3. Lors de l'application d'une telle tension d'actionnement V1 ou V2, une force d'attraction électrostatique F(x) est générée et la partie mobile 1 se déplace en rotation autour de l'axe 2, l'électrode mobile 5.1 étant attirée par la contre-électrode 5.2 ou 5.3 qui a généré la différence de potentiel V1 ou V2.

Un problème posé par l'actionnement électrostatique est que la force de rappel élastique (non représentée), causée par les bras de torsion 3, qui s'oppose au déplacement de la partie mobile est linéaire alors que la force d'attraction électrostatique est quadratique. De plus, lorsque la partie mobile 1 a parcouru environ un tiers de la distance séparant, au repos, l'électrode mobile 5.1 de la contre-électrode 5.2 ou 5.3, la force d'attraction prend le dessus et il se produit un phénomène de plaquage brusque des électrodes lorsque la différence de potentiel dépasse un certain seuil Vc ou tension de « pull in » (littéralement tension seuil d'attraction). Avant que la différence de potentiel n'atteigne la tension de « pull in » la réponse de la partie mobile (c'est à dire l'angle de rotation en fonction de la tension) n'est pas linéaire, ce qui complique la commande.

En conséquence, la course maîtrisée de l'électrode mobile correspond à une distance largement restreinte par rapport à la distance initiale séparant l'électrode mobile 5.1 des contre-électrodes 5.2, 5.3 en position de repos. Ce phénomène limite le débattement exploitable de la partie mobile 1. Un faible espace au repos entre l'électrode mobile et les contre-électrodes ne permettra qu'une mobilité avec un angle très réduit, et l'aménagement d'un plus grand espace au repos impliquerait l'utilisation d'une tension d'actionnement très importante, ce qui n'est pas souhaitable. De plus, le débattement de la partie mobile est relativement limité.

Le document [1], dont les références se trouvent en fin de description, montre un autre mode de réalisation d'un micro-miroir rotatif apte à se déplacer dans un seul sens lors de l'attraction entre deux électrodes. Ce mode de réalisation est illustré sur les figures 2A, 2B. Le micro-miroir a sensiblement la même structure que précédemment avec une partie fixe 4, une partie mobile 1 située au repos à distance de la partie fixe 4, dotée d'une zone réfléchissante 7 et d'un axe de rotation 2 matérialisé par deux bras de torsion 3 dont les extrémités sont solidaires de la partie fixe 4 et qui sont issus de la partie mobile 1. La différence avec l'exemple précédent se situe au niveau des moyens de commande électrique 5 de la rotation de la partie mobile 1. Les moyens de commande électrique 5 comportent une électrode mobile 50 issue de la partie mobile 1 et possédant une extrémité libre 50.1 et une électrode fixe 51 portée par la partie fixe 4, en regard de l'électrode mobile 50 en position de repos. L'électrode mobile 50 est solidaire d'un bord de la partie mobile 1. Les moyens de commande électrique 5 comprennent également des moyens d'adressage pour appliquer un signal d'adressage sous la forme d'une tension d'actionnement entre l'électrode fixe 51 et l'électrode mobile 50. Ces moyens ne sont pas représentés pour ne pas surcharger les figures. L'électrode mobile 50 est relativement flexible, elle est destinée à venir se plaquer progressivement, depuis son extrémité libre 50.1 sur l'électrode fixe 51. L'électrode mobile 50 est orientée sensiblement perpendiculairement par rapport à l'axe de rotation 2. Le phénomène de plaquage progressif entre l'électrode mobile 50 et l'électrode fixe 51 est connu sous la dénomination d' « effet zipping ». Une couche électriquement isolante (non visible sur les figures) est généralement interposée entre-l'électrode fixe 51 et l'électrode mobile 50 pour éviter l'apparition de courts-circuits. L'électrode mobile 50 comporte généralement un corps 50.2 qui se termine par une amorce 50.3 au niveau de son extrémité libre 50.1. La largeur de l'amorce 50.3 est plus grande que la largeur du corps 50.2 de l'électrode mobile 50.

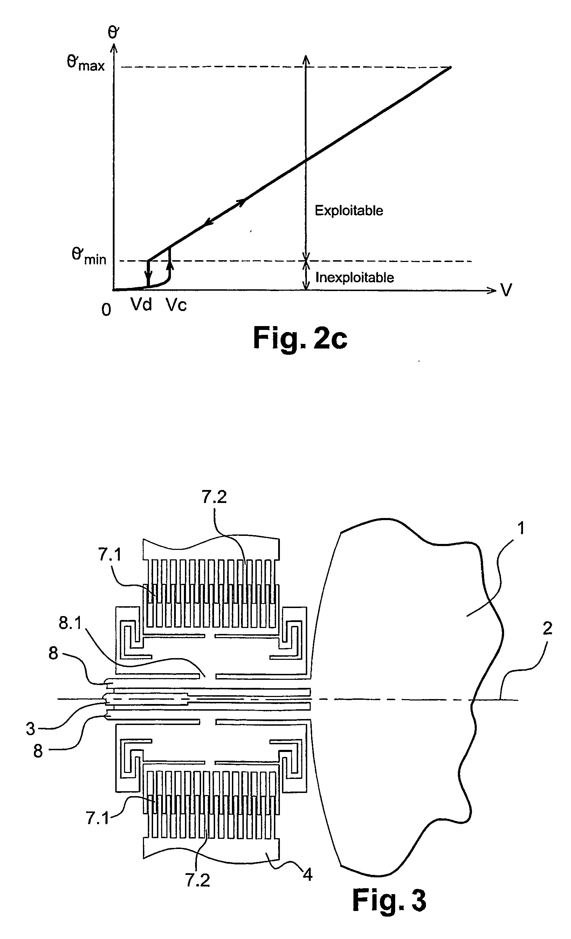

Au repos l'électrode fixe 51 et l'électrode mobile 50 sont distantes l'une de l'autre. Lorsque les moyens d'adressage appliquent un signal d'adressage à savoir une tension d'actionnement entre l'électrode mobile 50 et l'électrode fixe 51, tant que cette tension est inférieure à la tension seuil d'attraction Vc, l'électrode mobile 50 commence à se rapprocher de l'électrode fixe 51. Lorsque la tension d'actionnement atteint la valeur Vc, une partie de l'électrode mobile 50 correspondant sensiblement à l'amorce 50.3 vient se coller sur l'électrode fixe 51. La partie mobile 1 s'incline d'un angle θ par rapport à la position qu'elle avait au repos avant l'application de la tension d'actionnement. Cet angle est supérieur à un angle minimum θmin dont la signification va être donnée plus loin. Plus la tension d'actionnement augmente entre les deux électrodes 50, 51 plus la longueur de l'électrode mobile 50 plaquée sur l'électrode fixe 51 augmente et plus la partie mobile 1 du micro-miroir se déplace en rotation autour de l'axe 2. L'angle d'inclinaison θ de la partie mobile 1 et donc de la zone réfléchissante 7 est sensiblement proportionnel à la tension d'actionnement appliquée entre électrode fixe 51 et électrode mobile 50. Lorsque la tension d'actionnement décroît, la partie mobile 1 adopte le même comportement que précédemment mais en sens inverse jusqu'à ce que la tension d'actionnement atteigne une valeur minimale Vd (tension de « pull out » ou tension seuil de décollement) permettant de maintenir l'extrémité 50.1 de l'électrode mobile 50 juste plaquée sur l'électrode fixe 51. Cette tension Vd est inférieure à la tension Vc. Lorsque cette tension est appliquée, la partie mobile 1 est inclinée de l'angle θmin. Quand la tension d'actionnement décroît en dessous de Vd, l'électrode mobile 50 se décolle de l'électrode fixe 51 et la partie mobile 1 reprend sa position de repos sensiblement horizontale. La figure 2C représente la courbe de réponse (angle de rotation θ en fonction de la tension d'actionnement V appliquée entre l'électrode fixe 51 et l'électrode mobile 50) d'un tel micro-miroir.

Par rapport à l'exemple précédent avec actionnement électrostatique classique, on peut réduire la tension d'actionnement pour un même angle de rotation. Il existe une bonne linéarité entre la tension d'actionnement et l'angle d'inclinaison de la partie mobile, ce qui permet d'obtenir aisément une orientation précise de la partie mobile. La force développée par le déplacement de la partie mobile est inversement proportionnelle au carré de la distance séparant l'électrode mobile de l'électrode fixe. Or cette distance est très petite au voisinage de la partie plaquée de l'électrode mobile. Cette force est donc très importante dans la plage d'utilisation du micro-miroir. Cette distance est au moins égale à l'épaisseur de la couche diélectrique recouvrant l'électrode fixe. Il est ainsi possible de faire tourner la partie mobile avec des angles de l'ordre de 10 degrés avec une tension modérée typiquement inférieure à environ 100 V. En position de repos, l'électrode mobile ne doit pas être trop éloignée de l'électrode fixe (quelques micromètres à quelques dizaines de micromètres) pour limiter la tension d'actionnement, car la force électrostatique générée lors de l'application de la tension d'actionnement décroît rapidement lorsque la distance entre les deux électrodes augmente. Un premier inconvénient d'un tel dispositif est que la partie mobile ne peut pas se déplacer en rotation de part eu d'autre de la partie mobile. Un autre inconvénient de ce type d'actionnement est que la partie mobile ne peut pas prendre certaines orientations, ces orientations correspondent à des angles θ compris strictement entre 0 et θmin.

On peut remarquer sur les figures 2A, 2B, que l'axe de rotation 2 est décalé par rapport au centre géométrique de la partie mobile 1. Le décalage se fait de manière à le rapprocher de l'électrode mobile 50. Cette particularité permet d'augmenter le débattement de la partie mobile 1 tout en repoussant le moment où elle entre en butée avec la partie fixe 4 qui supporte l'électrode fixe 51. Mais, même avec cette particularité, la partie mobile 1 présente toujours un débattement limité. On a tendance alors à réduire la taille de la partie mobile 1, mais il faut trouver un compromis entre débattement et taille de la zone réfléchissante 7, cette dernière doit avoir une taille appropriée à la fonction optique qu'elle doit remplir. Il est souvent souhaitable que la zone réfléchissante 7 ait une envergure comprise entre quelques centaines de micromètres et quelques millimètres. Le même compromis est à trouver pour la taille de la zone réfringente de la micro-lentille. Un autre inconvénient de cette configuration est qu'il y a un risque d'introduire une composante verticale au mouvement du centre de la zone réfléchissante 7, ce qui peut donner un mouvement de translation latérale à un faisceau lumineux réfléchi résultant d'un faisceau lumineux incident à cet endroit.

Des informations complémentaires sur les micro-miroirs utilisant des moyens d'actionnement à effet « zipping » peuvent être trouvées dans le document [2] dont les références sont également précisées à la fin de la description. Dans ce document, des moyens de commande ont pour but de déformer le micro-miroir et non de le déplacer en rotation.

Il est également connu par le document [3] dont les références sont mentionnées en fin de description, un micro-miroir dont les moyens de commande électrique de la rotation comportent plusieurs couples d'électrodes 7.1, 7.2 interdigitées prenant la forme de peignes. Dans un couple d'électrodes, l'une des électrodes 7.2 en peigne est solidaire de la partie fixe 4. L'autre électrode 7.1 est solidaire via une charnière 8.1 d'un bras 8 qui est issu de la partie mobile 1. Ce bras 8 est parallèle au bras de torsion 3 solidaire de la partie fixe 4 qui contribue à matérialiser l'axe de rotation. Ce type d'actionnement est très efficace dans le mode oscillant, grâce au phénomène de résonance mécanique, mais ne convient pas bien pour fonctionner dans le mode statique ou quasi statique. Dans le mode statique ou quasi statique, ce type d'actionnement est plus efficace que l'actionnement électrostatique classique mais reste insuffisant pour obtenir de grands angles de rotation.

Le fait que l'électrode interdigitée mobile soit solidaire d'un bras 8 qui n'est pas le bras de torsion présente l'inconvénient d'éloigner l'électrode interdigitée de l'axe de rotation et donc de réduire le débattement maximal pour une tension d'actionnement donnée.

EP 1 193 528 et US 6,115,231 montrent un micro-miroir et un micro-relais, respectivement, comprenant une électrode fixe et une électrode mobile.

### EXPOSÉ DE L'INVENTION

La présente invention a pour but de proposer un micro-miroir ou une micro-lentille apte à prendre une ou plusieurs positions statiques ou quasi statiques en rotation ne présentant pas les limitations et difficultés ci-dessus. Ces limitations s'appliquaient également aux micro-lentilles.

Plus précisément un but de l'invention est de fournir un micro-miroir ou une micro-lentille susceptible de se mouvoir en rotation avec une amplitude importante et qui peut prendre une position fixe précise tout en conservant une tension d'actionnement réduite.

Un autre but de l'invention est de fournir un micro-miroir ou une micro-lentille qui peut prendre un angle d'inclinaison compris dans une grande plage d'angles, cette plage étant continue et s'étendant de part et d'autre de sa position de repos correspondant à un angle d'inclinaison nul.

Un autre but de l'invention est de fournir un micro-miroir ou une micro-lentille apte à prendre une position qui ne risque pas d'introduire une composante verticale au mouvement de la partie centrale de la zone réfléchissante du micro-miroir ou de la zone réfringente de la micro-lentille, cette zone centrale étant généralement celle sur laquelle un faisceau lumineux est réfléchi ou transmis.

Un autre but de l'invention est de fournir un micro-miroir ou une micro-lentille dont la partie mobile est de plus grande taille que dans les micro-miroirs ou les micro-lentilles classiques.

Pour y parvenir la présente invention propose un micro-miroir ou une micro-lentille comprenant une partie mobile avec une zone réfléchissante ou une zone réfringente respectivement, une partie fixe, des moyens de liaison de la partie mobile à la partie fixe matérialisant un axe de rotation contenu dans la partie mobile, sensiblement parallèle à un plan principal de la partie mobile, et des moyens de commande électrique de la rotation de la partie mobile autour de l'axe. Selon l'invention les moyens de commande électrique comportent deux actionneurs ou plus, formés chacun d'une électrode fixe solidaire de la partie fixe et d'une électrode mobile dotée d'une extrémité libre et d'une extrémité reliée à un bras d'entraînement sensiblement parallèle à l'axe et issu de la partie mobile, l'électrode mobile étant adaptée à se plaquer progressivement sur l'électrode fixe depuis son extrémité libre lorsqu'une tension d'actionnement est appliquée entre les deux électrodes d'un des actionneurs, le plaquage se faisant sur une surface variable en fonction de la tension appliquée entre les électrodes de l'actionneur, les actionneurs étant disposés de part et d'autre de l'axe.

Ainsi la partie mobile peut se déplacer en rotation avec une amplitude maximale double de celle existant dans la configuration décrite dans le document [1]. Une amplitude supérieure à environ plus ou moins 10 degrés peut être obtenue soit plus de 20 degrés au total.

Les moyens de liaison de la partie mobile à la partie fixe peuvent être deux bras de torsion issus de la partie mobile dont les extrémités sont reliées à la partie fixe.

De manière avantageuse, l'axe peut passer par le centre géométrique de la partie mobile, ce qui évite d'introduire une composante verticale au mouvement de la zone centrale de la partie mobile.

Il est possible que, d'un même côté de la partie mobile, un bras d'entraînement soit décalé par rapport à un bras de torsion. Mais il est particulièrement avantageux pour augmenter le débattement qu'un bras de torsion et un bras d'entraînement soient dans le prolongement l'un de l'autre.

Dans cette dernière configuration, pour conserver à la fois une souplesse en torsion et une rigidité en flexion verticale, il est préférable qu'au moins un bras de torsion ait une section transversale inférieure à celle d'un bras d'entraînement.

Il est bien sûr possible qu'un bras de torsion et un bras d'entraînement situés dans le prolongement l'un de l'autre aient sensiblement une même section transversale, les deux bras sont alors confondus.

Dans un mode de réalisation particulièrement efficace, plusieurs électrodes mobiles peuvent être reliées à un même bras d'entraînement.

Dans un autre mode de réalisation, chaque bras d'entraînement peut être solidaire d'une seule électrode mobile.

Dans encore un autre mode de réalisation qui améliore la précision de la position prise par la partie mobile, plusieurs électrodes mobiles situées d'un même côté de l'axe sont reliées entre elles au niveau de leur extrémité libre.

Pour rendre le micro-miroir ou la micro-lentille plus compact, il est possible qu'une électrode mobile soit enroulée sur elle-même, son extrémité libre se trouvant dans une zone centrale de l'enroulement.

Une configuration d'électrode mobile rectiligne est également possible.

Une configuration d'électrode mobile qui permet de réduire la tension nécessaire pour obtenir le plaquage de l'électrode mobile sur l'électrode fixe d'un actionneur est que l'électrode mobile comporte un corps de largeur sensiblement constante se prolongeant par une amorce au niveau de son extrémité libre, la largeur de l'amorce étant plus grande que celle du corps.

Il est possible que les électrodes fixes soient confondues, ce qui facilite la réalisation, dans cette configuration l'adressage se fait par les électrodes mobiles.

La partie fixe peut comporter une base et des montants sur lesquels s'appuient les moyens de liaison de la partie mobile à la partie fixe, la partie mobile étant suspendue au-dessus de la base.

Pour augmenter le débattement de la partie mobile, la base peut comporter un évidement en regard de la partie mobile qui est alors suspendue au-dessus de l'évidement.

Pour éviter des courts-circuits entre les électrodes des actionneurs, les électrodes fixes peuvent être recouvertes d'un matériau diélectrique.

Les moyens de commande peuvent comporter des moyens d'adressage aptes à appliquer une tension d'actionnement aux électrodes mobiles et/ou aux électrodes fixes d'un actionneur.

La tension d'actionnement peut être une tension continue superposée à une tension de commande variable.

Pour simplifier la commande de la rotation, il est possible qu'au moins une électrode fixe d'un actionneur soit morcelée en deux portions dont une portion d'extrémité, ces deux portions étant isolées l'une de l'autre, les moyens d'adressage étant aptes à appliquer une tension continue à la portion d'extrémité et une tension de commande variable à l'autre portion.

La tension continue peut être une tension minimale pour maintenir un plaquage de l'extrémité libre de l'électrode mobile de l'actionneur sur l'électrode fixe.

Lorsque la tension de commande appliquée à un actionneur situé d'un côté de l'axe est non nulle, la tension de commande appliquée en même temps à un actionneur situé de l'autre côté de l'axe peut être nulle.

La présente invention concerne également un procédé de réalisation d'un micro-miroir ou d'une micro-lentille ainsi caractérisé. Il comporte les étapes suivantes :
a) gravure du contour d'une première région de la partie mobile, d'une première région de la partie fixe, d'une première région des moyens de liaison de la partie mobile à la partie fixe, d'une première région des bras d'entraînement dans une couche superficielle et une première couche isolante d'un substrat stratifié comportant un empilement alterné d'une première et une seconde couches en matériau isolant et de deux couches semi-conductrices dont une est intermédiaire et l'autre superficielle,
b) dans un second substrat semi-conducteur gravure d'une partie en retrait, ce second substrat contribuant à réaliser une seconde région de la partie fixe et les électrodes fixes des actionneurs,
c) assemblage des deux substrats, la partie en retrait étant face à la couche superficielle gravée,
d) gravure du contour des électrodes mobiles, d'une seconde région de la partie mobile, d'une seconde région des bras d'entraînement et d'une seconde région des moyens de liaison, dans la couche intermédiaire et réalisation au préalable de métallisations reliées électriquement aux électrodes mobiles pour l'application de la tension d'actionnement de chaque actionneur via la partie fixe et la partie mobile.

Selon ce procédé, on peut réaliser des tranchées d'isolation lors de l'étape a) dans la couche superficielle et dans la couche d'isolation supérieure au niveau de la première région de la partie fixe et de la première région de la partie mobile et dans la couche intermédiaire lors de l'étape d) au niveau des électrodes mobiles et de la seconde région de la partie mobile pour assurer une isolation électrique des électrodes mobiles lors de l'application de la tension d'actionnement vers une électrode mobile via la première région de la partie fixe et la première région de la partie mobile.

L'étape b) peut inclure la gravure de l'évidement dans une partie centrale de la partie en retrait.

L'étape b) peut être suivie d'une étape de réalisation d'une couche de matériau isolant sur le second substrat gravé.

La seconde région de la partie mobile peut réaliser directement la zone réfléchissante du micro-miroir ou une étape de métallisation de la seconde région de la partie mobile peut être prévue pour réaliser la zone réfléchissante du micro-miroir.

En ce qui concerne la micro-lentille, on peut graver la partie mobile en forme de cadre lors de l'étape b).

On peut assembler une pièce réfringente lenticulaire au cadre de la partie mobile pour réaliser la zone réfringente.

On peut après l'assemblage de l'étape c) retirer la seconde couche isolante.

On choisit l'épaisseur de la couche superficielle plus grande que la couche intermédiaire de manière à obtenir des caractéristiques de torsion convenables pour les bras de torsion.

Le premier substrat peut être avantageusement un double substrat SOI et comporter du côté de la seconde couche isolante une couche semi-conductrice de base qui est ôtée après l'assemblage des deux substrats.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
Les figures 1A, 1B (déjà décrites) montrent une vue en coupe et une vue en trois dimensions d'un micro-miroir de l'art antérieur actionnable en rotation de manière électrostatique ;
Les figures 2A, 2B (déjà décrites) montrent une vue en trois dimensions' et une vue de dessus d'un micro-miroir de l'art antérieur actionnable en rotation par effet « zipping » et la figure 2C illustre l'angle d'inclinaison de la partie mobile du micro-miroir en fonction de la tension appliquée ;
La figure 3 (déjà décrite) est une vue de dessus d'un micro-miroir actionnable en rotation à l'aide d'électrodes interdigitées en peigne ;
La figure 4 est une vue de dessus d'un exemple de micro-miroir ou de micro-lentille selon l'invention
Les figures 5A, 5B illustrent une vue de dessus et une vue en coupe d'un autre exemple de micro-miroir ou de micro-lentille selon l'invention ;
Les figures 6A, 6B sont des coupes du micro-miroir ou de la micro-lentille des figures 5, destinées à expliquer un premier mode de fonctionnement, et la figure 6C représente la variation de l'angle d'inclinaison de la partie mobile du micro-miroir ou de la micro-lentille en fonction de la tension appliquée dans ce mode de fonctionnement ;
La figure 7 est une coupe du micro-miroir ou de la micro-lentille des figures 5 destinée à expliquer un second mode de fonctionnement ;
La figure 8A est une coupe du micro-miroir ou de la micro-lentille des figures 5 destinée à expliquer une variante du second mode de fonctionnement et la figure 8B représente la variation de l'angle d'inclinaison de la partie mobile du micro-miroir ou de la micro-lentille en fonction de la tension appliquée dans ce mode de fonctionnement ;
La figure 9 est une vue de dessus partielle d'un autre exemple de micro-miroir selon l'invention avec des électrodes mobiles-enroulées ;
La figure 10 est une vue de dessus partielle d'un autre exemple de micro-miroir selon l'invention dans lequel les extrémités libres des électrodes mobiles des actionneurs situés d'un même côté de l'axe sont communes ;
Les figures 11A à 11L représentent des étapes d'un exemple de procédé de réalisation de micro-miroirs ou de micro-lentilles selon l'invention.

Les différentes variantes doivent être comprises comme n'étant pas exclusives les unes des autres.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

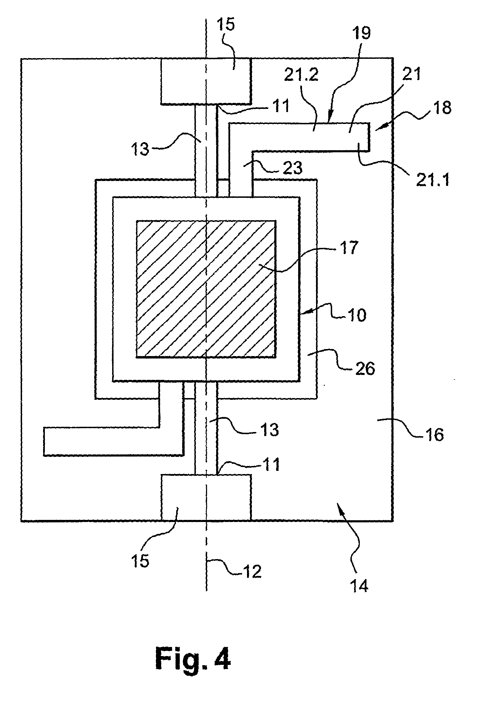

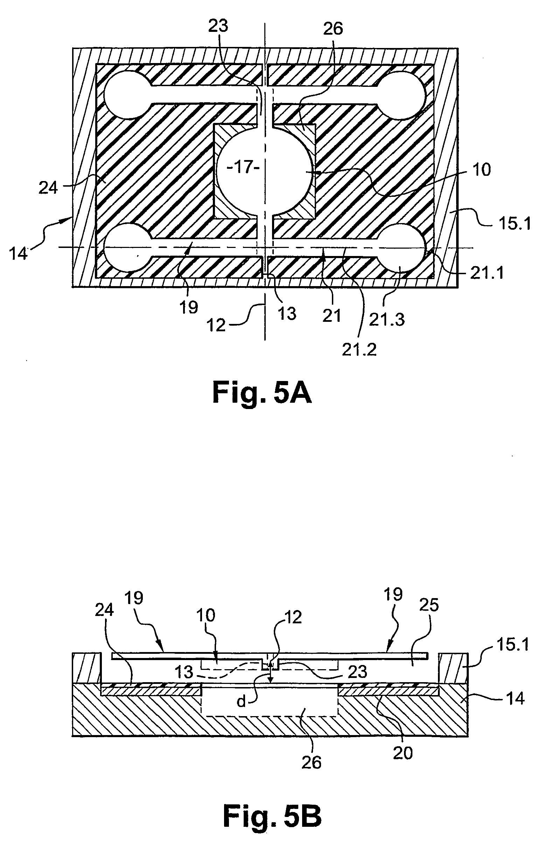

On va maintenant se référer aux figures 4, 5A, 5B qui montrent des exemples de micro-miroir ou de micro-lentille selon l'invention. Le micro-miroir ou la micro-lentille comporte une partie mobile 10 et une partie fixe 14. La partie mobile 10 prend globalement la forme d'un plateau ou d'un cadre respectivement. Elle est destinée à être déplacée en rotation autour d'un axe 12. L'axe passe par la partie mobile 10 et est sensiblement parallèle à un plan principal de la partie mobile 10. Des moyens de liaison 13 de la partie mobile 10 à la partie fixe 14 matérialisent cet axe 12. Ces moyens de liaison peuvent prendre la forme de deux bras torsion 13 issus de la partie mobile 10 et qui ont une extrémité 11 solidaire (par exemple par encastrement) de la partie fixe 14 au niveau de montants 15. Les deux bras de torsion 13 sont dans le prolongement l'un de l'autre. Les montants 15 de la partie fixe 14 reposent sur une base 16 qui s'étend sous la partie mobile 10. La partie mobile 10 est ainsi suspendue au-dessus de la partie fixe 14 au niveau de sa base 16. La partie mobile 10 comporte des faces principales dont une est tournée vers la partie fixe 14 au niveau de sa base 16 et dont l'autre est dotée d'une zone réfléchissante 17 (hachurée sur la figure 4) destinée à réfléchir de la lumière dans le cas d'un micro-miroir. La zone réfléchissante 17 est représentée comme n'occupant que partiellement la face de la partie mobile 10 mais elle pourrait l'occuper totalement. Dans le cas d'une micro-lentille, la zone 17 représente une zone réfringente, il peut s'agir d'une pièce réfringente lenticulaire fixée, par collage par exemple, au cadre 10. L'axe 12 peut passer par le centre géométrique de la partie mobile 10.

Le micro-miroir ou la micro-lentille comporte également des moyens de commande 18 électrique du déplacement en rotation de la partie mobile 10. Ces moyens 18 comportent au moins deux actionneurs 19 à « effet zipping » et des moyens d'adressage (non visibles sur la figure 4) de ces actionneurs.

Par actionneur 19 à « effet zipping », on entend un actionneur formé d'un couple d'électrodes 20, 21 avec une électrode fixe 20 et une électrode mobile 21 ayant une extrémité libre 21.1, l'électrode mobile 21 étant destinée à venir se plaquer sur l'électrode fixe 20 depuis son extrémité libre 21.1, le plaquage se faisant sur une surface variable en fonction d'une tension appliquée entre les deux électrodes. L'électrode mobile 21 est donc flexible.

L'électrode fixe 20 des actionneurs 19 est solidaire de la partie fixe 14 au niveau de la base 16. Elle n'est pas visible sur la figure 4, elle est cachée par l'électrode mobile 21. Elle est visible sur la figure 5B. L'électrode mobile 21 des actionneurs 19 est solidaire à son autre extrémité d'un bras d'entraînement 23 qui est issu de la partie mobile 10 et qui est dirigé sensiblement parallèlement à l'axe de rotation 12. Ce bras d'entraînement 23 est suffisamment rigide. Ainsi l'électrode mobile 21 n'est plus directement fixée à la partie mobile 10 comme dans les exemples des figures 2, elle en est décalée.

Selon un caractéristique importante, les extrémités libres 21.1 des électrodes mobiles 21 des deux actionneurs 19 sont situées de part et d'autre de l'axe de rotation 12. Les actionneurs 19 sont donc disposés de part et d'autre de l'axe 12. Ainsi, chacun des actionneurs 19 peut entraîner la partie mobile 10 dans un sens ou dans l'autre ce qui permet d'augmenter son débattement par rapport à l'exemple des figures 2. Des angles supérieurs à environ 10 degrés, de part et d'autre de la position de repos (angle nul) peuvent être obtenus avec une tension d'actionnement typiquement inférieure à 100V.

Les actionneurs 19 peuvent être adressés ou actionnés soit séparément ou soit simultanément comme ont le verra ultérieurement.

La partie mobile 10 peut avoir une envergure comprise entre quelques centaines de micromètres et quelques millimètres et une épaisseur d'environ quelques dizaines de micromètres. Il faut qu'elle possède une rigidité suffisante pour que la zone réfléchissante ou réfringente 17 qu'elle porte reste la plus stable possible de manière à conserver sa qualité optique quelles que soient les conditions et notamment lors d'accélérations. Ces dimensions ne sont pas limitatives bien entendu.

L'électrode mobile 21 peut prendre la forme depuis le bras d'entraînement 23, d'un corps 21.2 sensiblement rectiligne de largeur sensiblement constante se terminant au niveau de son extrémité libre 21.1 par une partie d'extrémité 21.3 qui peut être de même largeur que le corps 21.2 ou de manière avantageuse qui peut être plus large. Dans ce dernier cas la partie d'extrémité 21.3 peut être qualifiée d'amorce. Cette amorce 21.3 est visible sur la figure 5A. Quant à l'électrode fixe 20, elle peut avoir une forme quelconque dans la mesure où l'électrode mobile 21 peut se plaquer sur elle.

L'amorce 21.3 sert à réduire la tension seuil d'attraction Vc ainsi que la tension seuil de décollement Vd.

Lorsque l'actionneur est au repos, il n'est soumis à aucune tension d'actionnement. Ses électrodes mobile et fixe 20, 21 sont séparées par un espace 25 qui peut être plein d'un gaz (air ou autre) ou qui peut être vide. Cet espace inter-électrode 25 est illustré sur la figure 5B. Cet espace 25 peut être délimité par une cavité que contribuent à former les montants prenant la forme d'un cadre comme on le verra plus loin.

Il est préférable placer dans cet espace 25 une couche de matériau diélectrique 24 interposée entre les électrodes fixes 20 et les électrodes mobiles 21 pour éviter un court-circuit lorsqu'une électrode mobile 21 vient en contact avec une électrode fixe 20. Cette couche diélectrique 24 est visible sur la figure 5B, elle recouvre les électrodes fixes 20. L'épaisseur de la couche diélectrique 24 est comprise entre une valeur minimale et une valeur maximale. La valeur minimale est déterminée par le claquage de l'isolant soumis à un champ électrique généré par une tension d'actionnement donnée, appliquée entre les deux électrodes d'un actionneur. La valeur maximale est déterminée par la distance maximale selon laquelle les deux électrodes d'un actionneur peuvent se trouver lorsque la partie mobile 10 est dans la position de repos sans que la force d'attraction ne soit trop faible pour une tension d'actionnement donnée. Par exemple pour une tension d'actionnement de 100V, l'épaisseur minimale de la couche diélectrique 24 (réalisée par exemple en oxyde ou en nitrure d'un matériau semi-conducteur, le silicium par exemple) sera d'environ 0,2 micromètre.

A titre indicatif, l'électrode mobile 21 peut avoir une longueur comprise entre quelques dizaines de micromètres et quelques millimètres, une épaisseur comprise entre quelques dixièmes de micromètres et quelques micromètres, et une largeur de corps 21.2 très supérieure à son épaisseur. L'épaisseur rend l'électrode mobile 21 suffisamment flexible dans une direction sensiblement perpendiculaire à la surface de la base 16. S'il y a une amorce 21.3, cette dernière est plus grande que la largeur du corps 21.2. Au repos, l'espace 25 inter-électrode peut être d'environ quelques micromètres à quelques dizaines de micromètres.

Il est avantageux que la base 16 comporte en regard de la partie mobile 10 un évidement 26. La partie mobile 10 est susceptible de pénétrer dans l'évidement 26 lorsque la partie mobile 10 prend une position inclinée avec un angle important. La prise d'une position inclinée avec un tel angle d'inclinaison ne serait pas possible en l'absence de l'évidement 26 car la partie mobile 10 heurterait la base 16. Les électrodes fixes 20 sont situées sur la base 16 à l'extérieur de l'évidement 26 de manière à conserver l'espace inter-électrode 25 relativement faible en position de repos des actionneurs. La profondeur de l'évidement est choisie suffisante pour que la partie mobile puisse s'incliner d'un angle θmax sans heurter la base 16. L'angle θmax correspond à l'angle maximum pris par la partie mobile lorsque les moyens d'adressage (décrits ultérieurement) délivrent une tension d'actionnement maximale.

L'évidement 26 peut être un trou traversant la base 16 ou seulement un trou borgne dans la base 16. S'il s'agit d'un trou traversant, il peut être réalisé à partir de la face de la base 16 destinée à recevoir les électrodes fixes 20, (cette face est dite face avant) ou à partir de l'autre face de la base 16 qui est dite face arrière. Cet évidement 26 sera plutôt réalisé par une gravure humide qu'une gravure sèche dans le matériau de la base 16 qui est généralement un matériau semi-conducteur.

La distance d entre l'axe de rotation 12 et la partie fixe 14 au niveau de la surface de placage doit être relativement importante (par exemple supérieure à environ 50 micromètres) si on désire un angle d'inclinaison important (par exemple supérieur à 5°).

Il est possible que les montants supportant les bras de torsion 13 prennent la forme d'un cadre 15.1 qui entoure la partie mobile 10 et les actionneurs 19 et qui est solidaire de la base 16. Cette variante est représentée sur les figures 5A et 5B. Ce cadre 15.1 peut contribuer à délimiter une cavité. On préfère limiter la surface occupée par cette cavité de manière à faciliter une étape de scellement de deux substrats, qui sera décrite ultérieurement lors de la description d'un exemple de procédé de réalisation d'un micro-miroir ou d'une micro-lentille selon l'invention.

Les bras d'entraînement 23 peuvent être distincts des bras de torsion 13 comme sur la figure 4. Dans cette configuration un bras de torsion et un bras d'entraînement situés d'un même côté de la partie mobile sont décalés l'un par rapport à l'autre. Ce n'est pas bien sûr une obligation comme illustré sur la figure 5A. Sur cette figure, le bras d'entraînement 23 est plus proche de la partie mobile 10 que ne l'est le bras de torsion 13 qui le prolonge. Par la suite, sauf indication particulière, on considère qu'un bras d'entraînement 23 et un bras de torsion 13 sont dans le prolongement l'un de l'autre.

Il est préférable que le raccordement des électrodes mobiles 21 aux bras d'entraînement 23 se fasse le plus près possible de l'axe de rotation 12 de manière à autoriser un grand débattement de la partie mobile 10 tout en conservant l'espace inter-électrode 25 des actionneurs 19 relativement faible.

Les actionneurs 19 peuvent être situés de part et d'autre de la partie mobile 10, mais ce n'est pas une obligation, on pourrait envisager d'avoir seulement une paire d'actionneurs 19 avec les actionneurs 19 situés d'un même côté de la partie mobile 10. En se référant à la figure 5A, on pourrait n'avoir que deux des quatre actionneurs représentés, par exemple ceux qui correspondent à la coupe de la figure 5B.

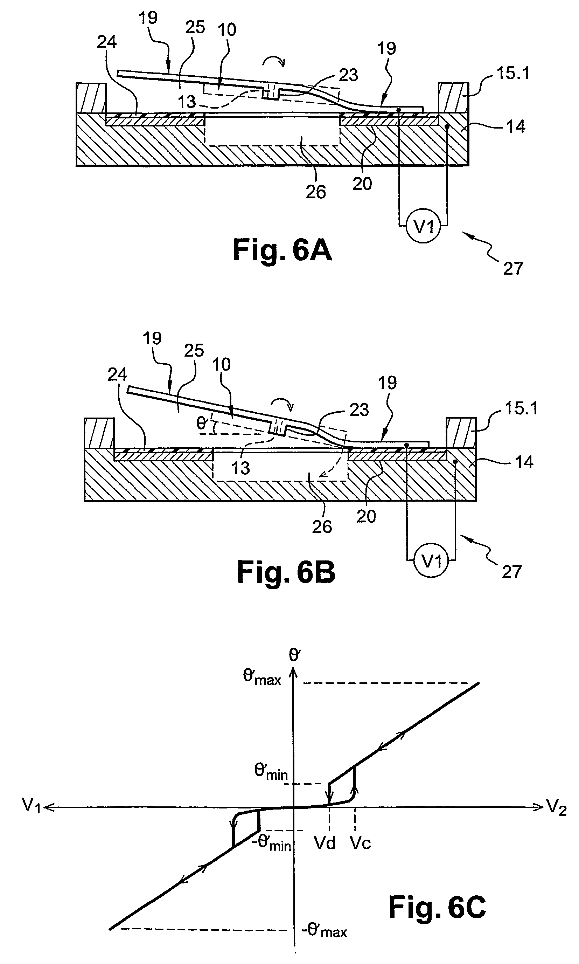

Sur les figures 6A, 6B et suivantes, les bras de torsion 13 sont dans le prolongement des bras d'entraînement 23. En pratique, un bras de torsion 13 a une section transversale inférieure à celle d'un bras d'entraînement 23, cette section transversale lui confère une certaine souplesse en torsion. Le bras d'entraînement 23 a une section transversale plus importante pour rester rigide lors de l'entraînement.

Ainsi le dimensionnement des bras de torsion 13 peut être optimisé de manière à ce qu'ils soient suffisamment souples en torsion et suffisamment raides en flexion verticale. Ils sont de manière avantageuse relativement épais et leur largeur sera inférieure à leur épaisseur. Si le bras de torsion 13 n'est pas suffisamment rigide en flexion verticale, l'actionneur 19 aura tendance à tirer la partie mobile 10 vers le bas plutôt qu'à l'entraîner en rotation. Le mouvement de la partie mobile 10 risque alors de ne pas être une pure rotation, ce qui peut donner un mouvement de translation latérale à un faisceau lumineux réfléchi ou transmis résultant d'un faisceau lumineux incident sur la zone réfléchissante ou réfringente 17.

On va donner maintenant des explications sur le fonctionnement d'un tel micro-miroir ou d'une telle micro-lentille actionnable en rotation autour d'un axe.

On se réfère aux figures 6A, 6B et au graphique de la figure 6C. On suppose que dans ce premier mode de fonctionnement, les actionneurs 19 situés de part et d'autre de l'axe 12 sont actionnés séparément. Des moyens d'adressage 27 actionnent soit un ou plusieurs actionneurs situés d'un côté de l'axe 12, soit un ou plusieurs actionneurs situés de l'autre côté de l'axe 19.

Au repos la partie mobile 10 est dans une position sensiblement horizontale (angle d'inclinaison θ nul) et les moyens d'adressage 27 n'appliquent aucune tension d'actionnement sur les électrodes 20, 21 de ces actionneurs 19. Les actionneurs 19 ne sont pas adressés. On peut se référer à la figure 4C. Il n'y a pas d'attraction entre l'électrode mobile 21 et l'électrode fixe 20 de l'un des actionneurs 19. Les électrodes 20, 21 des actionneurs 19 sont décollées et la partie mobile 10 en position de repos.

Lorsque les moyens d'adressage 27 commencent à appliquer un premier signal d'adressage à savoir une tension d'actionnement V1 entre les deux électrodes fixe 20 et mobile 21 de l'un des actionneurs 19 (ou de plusieurs actionneurs situés d'un même côté de l'axe 12) placé à droite sur les figures illustrant cet exemple de fonctionnement, il ne se passe rien avant que la tension V1 ait atteint la tension seuil d'attraction Vc. A ce moment l'extrémité libre 21.1 de l'électrode mobile 21 vient se plaquer sur l'électrode fixe 20 qui lui fait face. On provoque ainsi le collage des deux électrodes par leurs bouts. L'actionneur 19 sollicite le bras d'entraînement 23 vers la droite. Dans cet état la partie mobile 10 et donc la zone réfléchissante ou réfringente 17 a tourné brusquement d'un angle θ supérieur à +θmin (+θmin représente l'angle minimal d'inclinaison pris par la partie mobile 10 par rapport à sa position de repos). Le bord de la partie mobile 10 se trouvant d'un même côté de l'axe (c'est à dire du bras de torsion 13) que l'électrode mobile 21 qui vient se plaquer sur l'électrode fixe 20, s'abaisse et le bord opposé se soulève.

En augmentant la tension d'actionnement V1, l'électrode mobile 21 se plaque de plus en plus sur l'électrode fixe 20. Il y a propagation du plaquage en direction du bras d'entraînement 23. La surface de plaquage se rapproche du bras d'entraînement 23. La partie mobile 10 s'incline de plus en plus jusqu'à atteindre un angle +θmax qui correspond, dans un cas favorable, à une position dans laquelle toute l'électrode mobile 21 est plaquée sur l'électrode fixe 20 si la partie mobile 10 ne heurte pas avant le fond de l'évidement 26. L'angle θmax correspond dans le meilleur cas à l'angle pris par la partie mobile lorsque les moyens d'adressage appliquent la tension d'adressage maximale. Comme expliqué précédemment, lorsque la tension d'actionnement V1 décroît, la partie mobile 10 adopte le même comportement que précédemment mais en sens inverse, l'électrode mobile 21 se décolle progressivement de l'électrode fixe 20. Lorsque la tension d'actionnement V1 atteint la tension seuil de décollement Vd, seule l'extrémité 21.1 de l'électrode mobile 21 reste plaquée sur l'électrode fixe 20. L'angle θ décroît. C'est lorsque cette tension Vd est appliquée que la partie mobile 10 prend la position +θmin. Cette tension Vd est inférieure à la tension Vc. Lorsque la tension décroît en dessous de Vd, l'électrode mobile 21 se décolle de l'électrode fixe 20 et la partie mobile 10 reprend sa position de repos sensiblement horizontale. On annule ensuite la tension d'actionnement V1.

Lorsque les moyens d'adressage 27 appliquent un second signal d'adressage pour actionner le et/ou les autres actionneurs 19 situés de l'autre côté de l'axe 12 (à gauche sur les figures) à savoir une tension d'actionnement V2 (non représentée) la partie mobile 10 s'incline en sens inverse. L'inclinaison se fait à partir d'un angle θ supérieur à -θmin jusqu'à un angle -θmax plus on augmente la tension d'actionnement V2. A l'inverse, lorsqu'on diminue la tension d'actionnement V2, l'angle d'inclinaison θ décroît jusqu'à atteindre -θmin.

Avec un tel mode de fonctionnement, la partie mobile 10 peut alors se déplacer en rotation dans deux plages d'angles [-θmax,-θmin] et [+θmin, +θmax] disjointes et/ou prendre une position fixe se trouvant dans ces plages. Par contre la plage d'angles [-θmin, +θmin] ne peut être explorée. On ne peut obtenir un balayage continu de la partie mobile 10 dans la plage d'angles [-θmin, +θmin]. Cette dernière plage n'est pas exploitable pour la partie mobile 10. Dans ce mode de fonctionnement V1 et V2 ne sont jamais différentes de zéro ensemble. Pour une tension d'actionnement non nulle mais inférieure à la tension seuil d'attraction Vc, les électrodes d'un actionneur commencent à se rapprocher, l'inclinaison de la partie mobile est faible mais non nulle. Il serait bien sûr possible que les moyens d'adressage 27 actionnent simultanément des actionneurs 19 qui se trouvent de part et d'autre de l'axe 12.

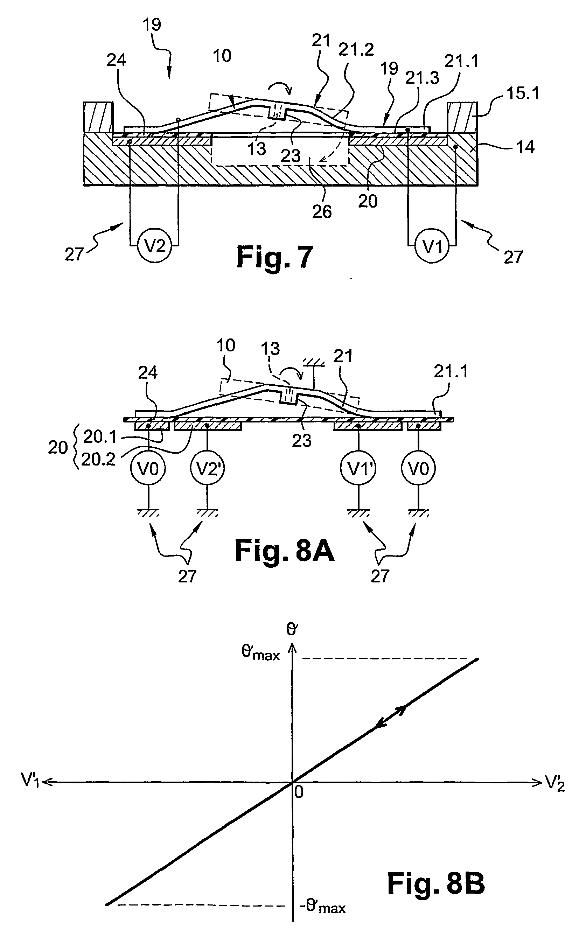

On se réfère à la figure 7 qui montre un second mode de fonctionnement du micro-miroir ou de la micro-lentille selon l'invention.

Les moyens d'adressage 27 appliquent maintenant une première tension d'actionnement V1 aux électrodes 20, 21 d'un ou plusieurs actionneurs 19 situés d'un côté de l'axe 12 (dans l'exemple à droite) et simultanément une seconde tension d'actionnement V2 aux électrodes 20, 21 d'un ou plusieurs actionneurs 19 situés de l'autre côté de l'axe 12 (par exemple à gauche). En choisissant convenablement les valeurs de ces tensions d'actionnement V1, V2, on peut faire prendre à la partie mobile 10 toutes les inclinaisons possibles comprises dans la plage d'angle [-θmax, +θmax]. En faisant varier ces tensions V1 et V2 dans le temps, la partie mobile 10 peut être animée d'un mouvement de balayage en rotation entre -θmax, +θmax.

Pour faciliter le réglage de la position ou du mouvement de la partie mobile 10, il est possible que les moyens d'adressage 27 appliquent en permanence une tension continue V0 non nulle aux actionneurs 19 cette tension V0 étant superposée à une tension de commande V1' ou V2' qui peut varier dans le temps et qui peut s'annuler. La tension continue V0 est la tension minimale qui maintient le plaquage de l'électrode mobile 21 contre l'électrode fixe 20. Elle est supérieure à la tension seuil de décollement Vd On obtient alors :
V1=V0+V1'
V2=V0+V2'
V1'≠0 avec V2'=0 et V2'≠0 et V1'=0.

Les tensions de commande V1' et V2' ne sont jamais nulles en même temps. Supposons que l'on veuille faire tourner la partie mobile vers la droite. Si V1' est non nulle, le collage de l'électrode mobile se propage à droite et la partie mobile tourne vers la droite. Mais si en même temps, V2' est aussi non nulle le collage va aussi se propager à gauche ce qui s'oppose à la rotation de la partie mobile vers la droite. Les tensions de commande V1' et V2' peuvent être indifféremment positives ou négatives.

Les moyens d'adressage 27 des actionneurs 19 peuvent agir soit au niveau des électrodes fixes 20, soit au niveau des électrodes mobiles 21 soit encore au niveau des deux électrodes fixe 20 et mobile 21 mais c'est plus compliqué. Les électrodes non adressées sont au potentiel de masse. La commande des actionneurs se trouvant d'un côté de l'axe étant indépendante de celle se trouvant de l'autre côté de l'axe, cela implique que les électrodes fixes 20 ou mobiles 21 situées d'un côté de l'axe 12 soient isolées électriquement de celles situées de l'autre côté de l'axe 12. Cette isolation peut se faire de manière classique par dépôts de pistes conductrices distinctes sans liaison, par des tranchées d'isolation, par exemple des tranchées d'air ou des tranchées remplies d'un matériau diélectrique dans des zones conductrices, par implantation ionique de zones de dopage opposé à celui du substrat dans lequel ces zones sont implantées.

Si ce sont les électrodes fixes 20 qui sont adressées, des pistes conductrices les rejoignant peuvent être réalisées sur la base (non représentées), sous la couche diélectrique 24, les électrodes mobiles 21 étant conservées à un même potentiel (généralement le potentiel de masse).

Si ce sont les électrodes mobiles 21 qui sont adressées, toutes les électrodes fixes 20 peuvent être maintenues à un même potentiel. Dans ce cas, les électrodes fixes 20 peuvent être confondues et ne former qu'une unique électrode fixe comme on le verra plus loin.

Dans le cas où l'adressage se fait à partir des électrodes fixes 20, il est possible de morceler les électrodes fixes 20 en deux portions distinctes isolées électriquement l'une de l'autre. La première portion 20.1 correspondant à la partie sur laquelle l'extrémité libre 21.1 (ou l'amorce 21.3) de l'électrode mobile 21 doit venir se plaquer lorsqu'on lui applique la tension continue V0 supérieure à la tension seuil de décollement Vd comme expliqué précédemment. Elle maintient l'extrémité libre 21.1 de l'électrode mobile 21 collée sur l'électrode fixe 20. La seconde portion 20.2 correspondant à la partie sur laquelle le corps 21.2 de l'électrode mobile 21 doit venir se plaquer. On lui applique la tension de commande V1' ou V2' selon qu'elle se trouve d'un côté ou de l'autre de l'axe 12. Cette variante est illustrée sur la figure 8A. Cette structure a pour avantage, par rapport à la configuration de la figure 7, de simplifier le fonctionnement des moyens d'adressage 27. Il est inutile de superposer la tension continue V0 à la tension de commande V1' ou V2'.

Par rapport aux exemples des figures 2, on a doublé l'amplitude du déplacement de la partie mobile 10. La figure 8B représente la courbe de réponse (angle de rotation θ en fonction des tensions d'actionnement V1' et V2' appliquées aux actionneurs de droite et de gauche respectivement du micro-miroir ou de la micro-lentille représenté à la figure 8A. La variation de l'angle d'inclinaison est linéaire et continue entre - θmax, +θmax.

Dans les deux exemples décrits, il serait bien sûr possible que les moyens d'adressage 27 actionnent simultanément des actionneurs 19 qui se trouvent de part et d'autre de l'axe 12, les tensions de commande V1' et V2' seraient non nulles toutes les deux en même temps.

Le fait de placer l'évidement 26 sous la partie mobile 10 permet d'augmenter la taille de la partie mobile 10 et en conséquence la taille de la zone réfléchissante ou réfringente sans à avoir à augmenter la tension d'actionnement.

Un tel micro-miroir ou une telle micro-lentille est particulièrement bien adapté à une utilisation en mode statique ou quasi statique de fréquence très inférieure à la fréquence de résonance mécanique avec une grande amplitude. Toutefois une utilisation en mode résonant est possible si les tensions d'actionnement des actionneurs sont alternatives (par exemple sinusoïdales) sensiblement à la fréquence de résonance.

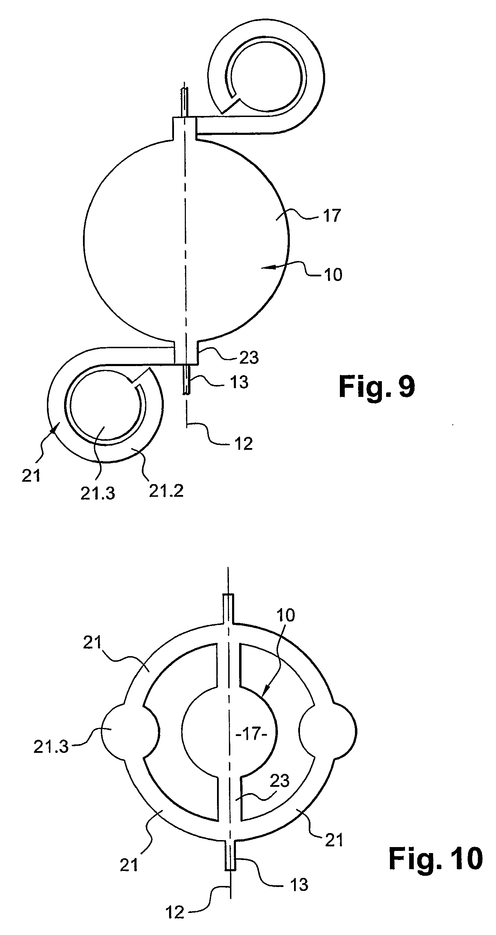

On peut maintenant se référer à la figure 9 qui montre une variante de configuration pour les électrodes fixe 20 et mobile 21 d'un actionneur 19 d'un micro-miroir. Il pourrait bien entendu s'agir d'une micro-lentille. Au lieu que l'électrode mobile 21 comporte un corps 21.2 rectiligne avec éventuellement en bout une amorce 21.3, il est possible que l'électrode soit enroulée sur elle-même sensiblement en spirale, l'extrémité libre 21.1 ou l'amorce 21.3, si elle existe, se trouvant sensiblement au centre de l'enroulement. Cette variante est illustrée sur la figure 9. Le micro-miroir est ainsi plus compact qu'avec des électrodes mobiles 21 rectilignes. Il en serait de même pour la micro-lentille.

Dans le but de simplifier l'adressage des actionneurs et d'améliorer la compacité du micro-miroir, il est possible que deux ou plusieurs électrodes mobiles 21 appartenant à des actionneurs 19 situés d'un même côté de l'axe 12 aient leur extrémité libre 21.1 en commun, qu'elles possèdent une amorce 21.3 ou non. Cette variante est représentée sur la figure 10. Il pourrait bien sûr également s'agir d'une micro-lentille. Cette configuration a pour avantage de garantir un plaquage exactement au même instant des actionneurs 19 correspondants.

On va maintenant décrire un exemple de procédé de réalisation d'un micro-miroir ou d'une micro-lentille selon l'invention.

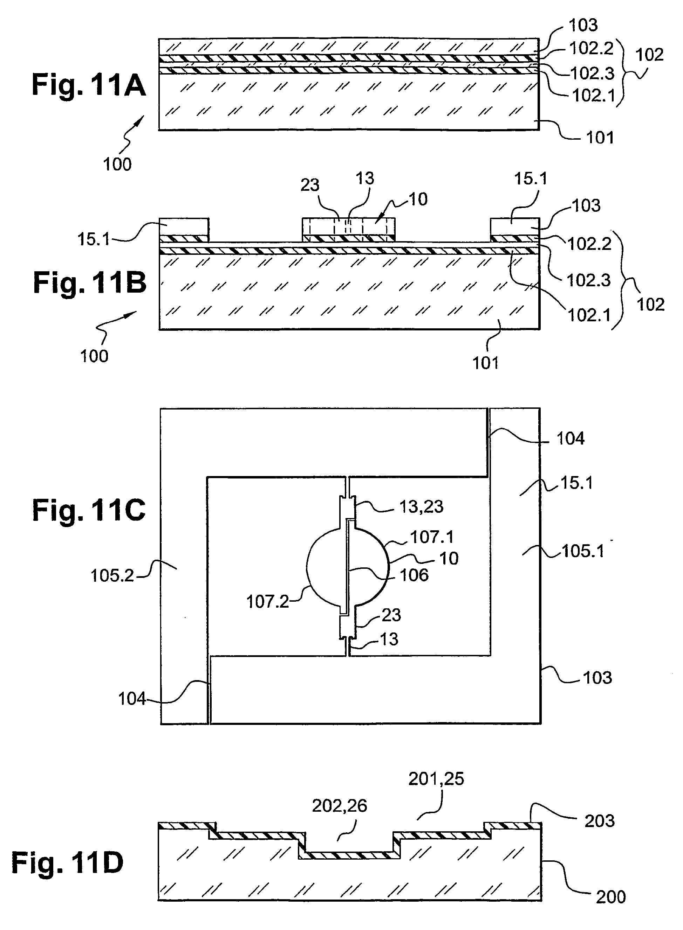

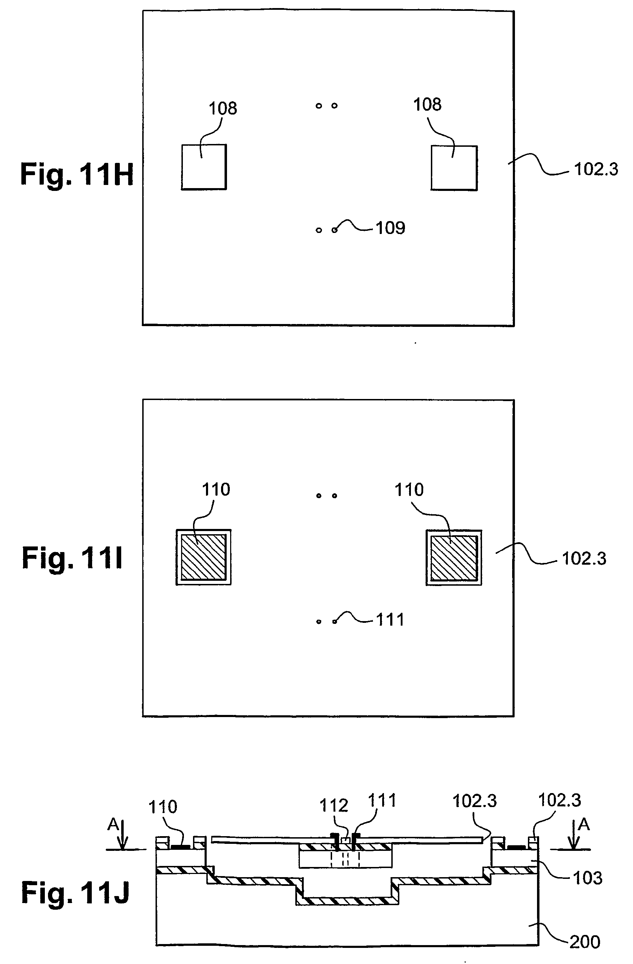

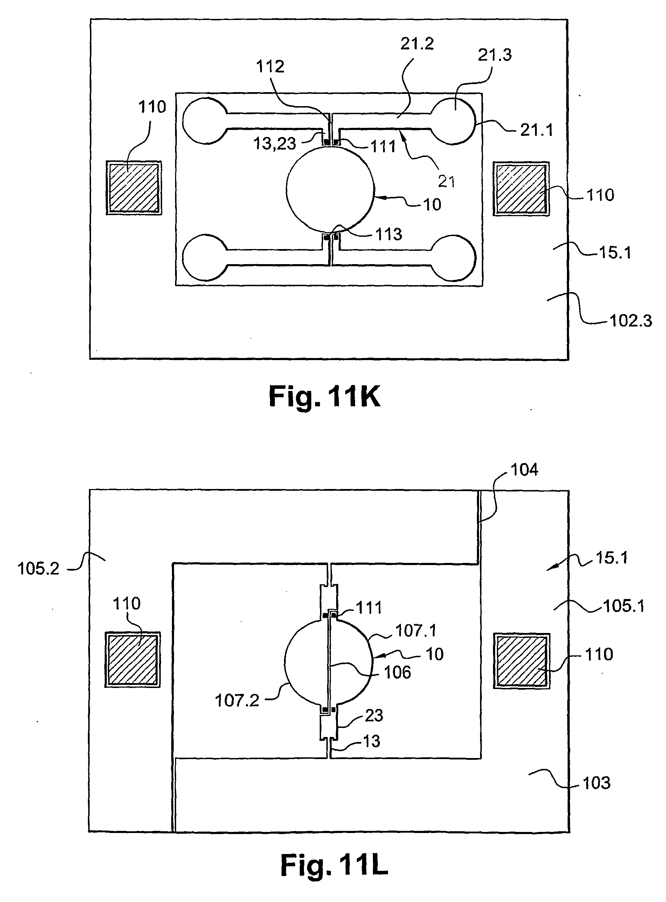

On suppose que les moyens d'adressage appliquent des tensions appropriées sur les électrodes mobiles des actionneurs pour déplacer en rotation la partie mobile tandis que les électrodes fixes sont portées à une tension constante. (généralement la masse). On se réfère aux figures 11A à 11L. On suppose que les substrats semi-conducteurs sont conducteurs.

On utilise un premier substrat 100 formé d'une couche de base 101 en matériau semi-conducteur, par exemple en silicium, recouverte d'un sandwich 102. formé par deux couches isolantes 102.1, 102.2 (par exemple en oxyde de silicium) situées de part et d'autre d'une couche intermédiaire 102.3 en matériau semi-conducteur (par exemple en silicium), le sandwich 102 étant lui-même recouvert par une couche superficielle 103 en matériau semi-conducteur (par exemple en silicium). Ce substrat est illustré sur la figure 11A. La couche isolante référencée 102.1 est la couche inférieure du sandwich et la couche 102.2 est la couche supérieure du sandwich. Un tel substrat 100 peut être un double substrat SOI (pour Silicon on Insulator abréviation anglo-saxonne de silicium sur isolant). La couche superficielle 103 est plus épaisse que la couche intermédiaire 102.3. Les couches en matériau semi-conducteur 101, 102.3, 103 sont conductrices.

On suppose que dans cet exemple, le micro-miroir ou la micro-lentille est similaire à celui des figures 5A, 5B, les bras d'entraînement et de torsion sont bout à bout.

On commence par délimiter par une étape de photolithographie le motif d'une première région de la partie fixe 14 à savoir le cadre 15.1 ou les montants, d'une première région de la partie mobile 10, d'une première région des bras de torsion 13 et d'entraînement 23. On grave ensuite ces différents éléments dans la couche superficielle 103 et dans la couche isolante supérieure 102.2 (figure 11B). Cette étape de gravure peut être une étape de gravure sèche. Les premières régions sont donc formées du matériau semi-conducteur de la couche superficielle et du matériau de la couche isolante, supérieure. Si l'on réalise un micro-miroir, la partie mobile 10 reste pleine, tandis que si l'on réalise une micro-lentille, on grave la partie mobile 10 telle un cadre avec un évidement central. Cette gravure en cadre est esquissée en pointillés sur la figure 11B.

Les électrodes mobiles des actionneurs seront réalisées elles dans la couche intermédiaire 102.3 ultérieurement.

Les bras de torsion, le cadre et la partie mobile vont servir à acheminer les signaux d'adressage aux électrodes mobiles des actionneurs. Ces signaux d'adressage se propagent dans le cadre et les bras de torsion depuis des plots de contact portés par le cadre et réalisés ultérieurement. Un des bras de torsion va servir pour l'adressage des actionneurs situés d'un côté de l'axe et l'autre bras de torsion pour l'adressage des actionneurs situés de l'autre côté de l'axe. Pour que les signaux d'adressage destinés aux électrodes mobiles situées d'un côté de l'axe ne se propagent pas aux électrodes mobiles situées de l'autre côté de l'axe qui elles doivent recevoir d'autres signaux d'adressage, on réalise, dans la couche superficielle 103 et aussi dans la couche isolante supérieure 102.2 (figure 11C), des tranchées d'isolation 104 au niveau du cadre 15.1 et une tranchée d'isolation 106 au niveau de la première région de la partie mobile 10. Ces tranchées peuvent être des tranchées d'air ou être ultérieurement emplies de matériau diélectrique. Si au lieu d'avoir un cadre, on prévoit deux montants comme sur la figure 4, ces derniers sont électriquement isolés de par leur configuration. Les tranchées d'isolation 104 découpent le cadre 15.1 en deux parties 105.1, 105.2, l'une 105.1 devant porter un des plots de contact transmettant un des signaux d'adressage et l'autre partie 105.2 devant porter l'autre plot de contact transmettant l'autre signal d'adressage. Les plots ne sont pas visibles à cette étape (figure 11C). De la même manière, la couche superficielle 103 correspondant à la première région de la partie mobile 10 est séparée en deux parties 107.1, 107.2 par la tranchée d'isolation 106. L'un des bras de torsion est issu de l'une des parties 107.1 et l'autre de l'autre partie 107.2. La tranchée d'isolation 106 est dirigée dans sa majorité selon l'axe de rotation 12. La tranchée d'isolation 106 est visible sur la figure 11C.

Dans un second substrat semi-conducteur 200 (par exemple en silicium) qui va servir de seconde région de la partie fixe 14, à savoir la base 16, on réalise par gravure une première partie en retrait 201 qui va contribuer à former l'espace 25 entre électrodes fixe et mobile des actionneurs et éventuellement une seconde partie en retrait 202 qui va former l'évidement 26 devant se trouver sous la partie mobile 10. La première partie 201 en retrait est moins profonde que la seconde partie en retrait 202.

La seconde partie en retrait 202 est située dans une zone centrale de la première partie en retrait 201. Cette gravure peut être une gravure sèche. Le second substrat 200 ainsi gravé va matérialiser les électrodes fixes 20 qui sont alors confondues pour tous les actionneurs. Les électrodes fixes sont ainsi incluses dans la base. On recouvre ensuite le second substrat 200 ainsi gravé d'une couche de matériau isolant 203, par exemple du nitrure de silicium ou un oxyde (figure 11D). La couche de matériau isolant 203 matérialise la couche isolante 24 insérée entre électrodes fixes 20 et mobiles 21.

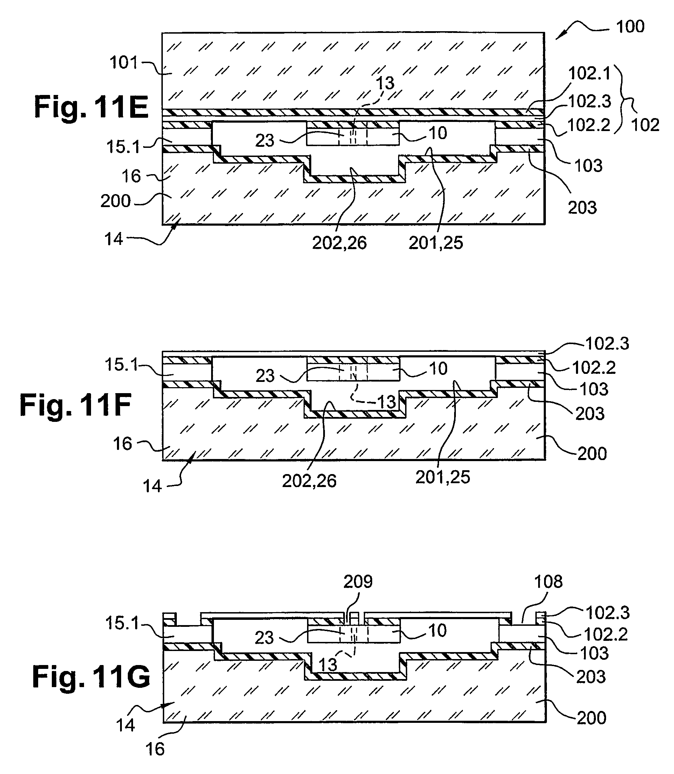

On fixe ensuite les deux substrats 100, 200 ensemble en plaçant la première partie en retrait 201 face à la couche superficielle 103 gravée (figure 11E). Cette fixation peut se faire par un procédé d'adhésion moléculaire après avoir préparé les surfaces à assembler de manière appropriée. Un tel procédé d'adhésion moléculaire est connu par le sigle SDB abréviation anglo-saxonne de Silicon Direct Bonding. La seconde partie en retrait 202 est en vis à vis avec la première région de la partie mobile 10.

On retire par exemple par une rectification mécanique grossière suivie d'une gravure humide du silicium la couche de base 101 et la couche d'isolant inférieure 102.1 du sandwich 102 du premier substrat 100 (figure 11F).

On va ensuite graver la couche intermédiaire 102.3 et la couche isolante supérieure 102.2 pour avoir accès à la couche superficielle 103 de manière à délimiter des plots de contact. Les zones ainsi gravées sont référencées 108 sur la figure 11G. On grave aussi dans la couche superficielle 103 des trous d'interconnexion 109 -qui serviront, une fois métallisés, à faire des reprises de contact, entre les électrodes mobiles et les parties 107.1, w1.07.1- de la première région de la partie mobile 10. Ces trous d'interconnexion 109 sont creusés dans les bras de torsion 13 dans une zone où ils se projettent de la partie mobile 10 mais d'autres endroits seraient possibles. Il y a autant de trous d'interconnexion 109 que d'électrodes mobiles 21. Les reprises de contact vont permettre de relier électriquement les dites parties 107.1, 107.2 aux électrodes mobiles 21. Cette étape de gravure est illustrée aux figures 11G et 11H.

Ensuite on dépose du métal de manière à réaliser les plots de contact 110 et les reprises de contact 111 dans les zones gravées 108 et les trous d'interconnexion 109 (figure 111). Le matériau déposé peut être du tungstène, de l'aluminium ou tout autre métal ou alliage utilisé classiquement.

Les figures 11J et 11K montrent, en coupe et en vue de dessus respectivement, le résultat d'une étape de gravure dans la couche intermédiaire 102.3 qui a pour but de délimiter le contour des électrodes mobiles 21 avec leurs amorces 21.3 et leurs corps 21.2, d'une seconde région de la partie mobile 10, d'une seconde région des bras de torsion et des bras d'entraînement (qui sont confondus). La seconde région de la partie mobile, la seconde région des bras de torsion, la seconde région des bras d'entraînement sont donc formées dans le matériau semi-conducteur de la couche intermédiaire 102.3.

Les première et seconde régions de la partie mobile, des bras de torsion et des bras d'entraînement sont superposées et forment donc un empilement de la couche superficielle de la couche isolante supérieure et de la couche intermédiaire. On prévoit bien sûr une tranchée d'isolation 112 entre deux électrodes mobiles, situées de part et d'autre de l'axe 12 et qui sont solidaire du même bras de torsion 13 et une tranchée d'isolation 113 entre la partie mobile 10 et les électrodes mobiles 21.

La figure 11L est une coupe du micro-miroir ou de la micro-lentille dans un plan AA de la figure 11J. Par rapport à la figure 11C, on y voit les plots de contact 110 et les reprises de contact 111.

La zone réfléchissante 17 du micro-miroir peut être réalisée par le matériau semi-conducteur de la couche intermédiaire 102.3 se trouvant au niveau de la seconde région de la partie mobile 10 s'il présente une réflectivité suffisante. On pourrait bien sûr la réaliser par métallisation par exemple d'or, d'argent, d'aluminium ou autre de la dite seconde région de la partie mobile.

En ce qui concerne la micro-lentille, on peut rapporter, par exemple par collage, une pastille réfringente lenticulaire 17 sur le cadre formant la partie mobile 10. On suppose que cette pastille est esquissée sur la figure 11K. La zone 17 pourrait également représenter la zone réfléchissante du micro-miroir.

Les termes « gauche », « droit », « haut », « bas », « inférieur », « supérieur », « horizontal », « vertical » et autres sont applicables aux modes de réalisation montrés et décrit en relation avec les figures. Ils sont employés uniquement pour les besoins de- la description et ne s'appliquent pas nécessairement à la position prise par le micro-miroir lorsqu'il est en fonctionnement.

D'autres modes de réalisation de micro-miroirs sont envisageables. Notamment le nombre d'actionneurs n'est pas limité à deux ou à quatre comme illustré. Ce nombre peut être quelconque, il y a au moins un actionneur d'un côté de l'axe et au moins un actionneur de l'autre côté.

### RÉFÉRENCES CITÉES :

[1] "Two-phase actuators : stable zipping devices without fabrication of curved structures", J.R. Gilbert, S.D. Senturia, Solid-state Sensor and Actuator Workshop, June 1996, Hilton Head S.C pages 98-100.
[2] "A micromachined deformable mirror for adaptative optics", W. Schwartz, C. Divoux, J. Margail, L. Jocou, J. Charton, E. Stadler, T. Jager, F. Casset, T. Enot, Proceedings of SPIE 2003, vol. 4985, pages 230-241.
[3] "A scanning micro-mirror with angular comb drive actuation", P.R Patterson, D. Hah, H. Nguyen, H. Toshiyoshi, R. Chao, M. C. Wu, 2002 IEEE, pages 544-547.

## Revendications

1. Micro-miroir comprenant une partie mobile (10) avec une zone réfléchissante (17), une partie fixe (14), des moyens de liaison (13) de la partie mobile (10) à la partie fixe (14) matérialisant un axe de rotation (12) contenu dans la partie mobile (10), sensiblement parallèle à un plan principal de la partie mobile (10), et des moyens de commande électrique (18) de la rotation de la partie mobile (10) autour de l'axe (12), **caractérisé en ce que** les moyens de commande électrique (18) comportent deux actionneurs (19) ou plus, formés chacun d'une électrode fixe (20) solidaire de la partie fixe (14) et d'une électrode mobile (21) dotée d'une extrémité libre (21.1) et d'une extrémité reliée à un bras d'entraînement (23) sensiblement parallèle à l'axe (12) et issu de la partie mobile (10), l'électrode mobile (21) étant adaptée à se plaquer progressivement sur l'électrode fixe (20) depuis son extrémité libre (21.1) lorsqu'une tension d'actionnement (V1, V2) est appliquée entre les deux électrodes (20, 21) d'un des actionneurs (19), le plaquage se faisant sur une surface variable en fonction de la tension appliquée entre les électrodes dé l'actionneur, les actionneurs (19) étant disposés de part et d'autre de l'axe (12).

2. Micro-miroir selon la revendication 1, dans lequel les moyens de liaison de la partie mobile (10) à la partie fixe (14) sont deux bras de torsion (13) issus de la partie mobile (10) dont les extrémités (11) sont reliées à la partie fixe (14).

3. Micro-miroir selon l'une des revendications 1 ou 2, dans lequel l'axe (12) passe par le centre géométrique de la partie mobile (10).

4. Micro-miroir selon l'une des revendications 2 ou 3, dans lequel, d'un même côté de la partie mobile (10), un bras d'entraînement (23) est décalé par rapport à un bras de torsion (13).

5. Micro-miroir selon l'une des revendications 2 ou 3, dans lequel, d'un même côté de la partie mobile (10), un bras d'entraînement (23) et un bras de torsion (13) sont dans le prolongement l'un de l'autre.

6. Micro-miroir selon la revendication 5, **caractérisé en ce que** le bras de torsion (13) a une section transversale inférieure à celle du bras d'entraînement (23).

7. Micro-miroir selon la revendication 5, **caractérisé en ce que** le bras de torsion (13) a une section transversale sensiblement égale à celle du bras d'entraînement (23).

8. Micro-miroir selon l'une des revendications 1 à 7, dans lequel plusieurs électrodes mobiles (21) sont reliées à un même bras d'entraînement (23).

9. Micro-miroir selon l'une des revendications 1 à 7, dans lequel chaque bras d'entraînement (23) est solidaire d'une seule électrode mobile (21).

10. Micro-miroir selon l'une des revendications 1 à 9, dans lequel plusieurs électrodes mobiles (21) situées d'un même côté de l'axe (12) sont reliées entre elles au niveau de leur extrémité libre (21.1).

11. Micro-miroir selon l'une des revendications 1 à 10, dans lequel au moins une électrode mobile (21) est enroulée sur elle-même, son extrémité libre (21.1) se trouvant dans une zone centrale de l'enroulement.

12. Micro-miroir selon l'une des revendications 1 à 10, dans lequel au moins une électrode mobile (21) est sensiblement rectiligne.

13. Micro-miroir selon l'une des revendications 1 à 12, dans lequel au moins une électrode mobile (21) comporte un corps (21.2) de largeur sensiblement constante se prolongeant par une amorce (21.3) au niveau de son extrémité libre (21.1), la largeur de l'amorce (21.3) étant plus grande que celle du corps (21.2).

14. Micro-miroir selon l'une des revendications 1 à 13, dans lequel les électrodes fixes (20) des actionneurs (19) sont confondues.

15. Micro-miroir selon l'une des revendications 1 à 14, dans lequel la partie fixe (14) comporte une base (16) et des montants (15) sur lesquels s'appuient les moyens de liaison (13), la partie mobile (10) étant suspendue au-dessus de la base (16).

16. Micro-miroir selon la revendication 15, dans lequel la base (16) comporte un évidement (26) en regard de la partie mobile (10)qui est suspendue au-dessus de l'évidement (26).

17. Micro-miroir selon l'une des revendications 1 à 16, dans lequel les électrodes fixes (20) sont recouvertes d'un matériau diélectrique (24).

18. Micro-miroir selon l'une des revendications 1 à 17, dans lequel les moyens de commande électrique (18) comportent des moyens d'adressage (27) aptes à appliquer une tension d'actionnement (V1, V2) aux électrodes mobiles et/ou aux électrodes fixes.

19. Micro-miroir selon la revendication 18, dans lequel la tension d'actionnement est une tension continue (V0) superposée à une tension de commande variable (V1', V2').

20. Micro-miroir selon la revendication 18, dans lequel au moins une électrode fixe (20) d'un actionneur est morcelée en deux portions (20.1, 20.2) dont une portion d'extrémité (20.1), ces deux portions (20.1, 20.2) étant isolées l'une de l'autre, les moyens d'adressage (27) étant aptes à appliquer une tension continue (V0) à la portion d'extrémité (20.1) et une tension de commande variable (V1', V2') à l'autre portion (20.2).

21. Micro-miroir selon l'une des revendications 19 ou 20, dans lequel la tension continue (V0) est une tension minimale pour maintenir un plaquage de l'extrémité libre (21.1) de l'électrode mobile (21) de l'actionneur sur l'électrode fixe (20).

22. Micro-miroir selon l'une des revendications 19 à 21, dans lequel, lorsque la tension de commande appliquée à un actionneur situé d'un côté de l'axe est non nulle, la tension de commande appliquée en même temps à un actionneur situé de l'autre côté de l'axe est nulle.

23. Procédé de réalisation d'un micro-miroir selon l'une des revendications 1 à 22, **caractérisé en ce qu'**il comporte les étapes suivantes :
a) gravure du contour d'une première région de la partie mobile (10), d'une première région de la partie fixe (14), d'une première région des bras d'entraînement (23), d'une première région des moyens de liaison (13), dans une couche superficielle (103) et une première couche isolante (102.2) d'un substrat stratifié (100) comportant un empilement alterné d'une première et une seconde couches (102.1, 102.2) en matériau isolant et de deux couches semi-conductrices (103, 102.3) dont une est intermédiaire (102.3) et l'autre superficielle (103),
b) dans un second substrat semi-conducteur (200) gravure d'une partie en retrait (201), ce second substrat (200) contribuant à réaliser une seconde région de la partie fixe (14) et les électrodes fixes (20) des actionneurs (19),
c) assemblage des deux substrats (100, 200), la partie en retrait (201) étant face à la couche superficielle (103) gravée,
d) gravure du contour des électrodes mobiles (21), d'une seconde région de la partie mobile (10), d'une seconde région des moyens de liaison (13), d'une seconde région des bras d'entraînement (23), dans la couche intermédiaire (102.3) et réalisation au préalable de métallisations (110, 111) reliées électriquement aux électrodes mobiles (21) pour l'application de la tension d'actionnement (V1, V2) de chaque actionneur (19) via la partie fixe (14) et la partie mobile (10)

24. Procédé selon la revendication 23, dans lequel on réalise des tranchées d'isolation (104, 105) lors de l'étape a) dans la couche superficielle (103) et la couche d'isolation supérieure (102.2) au niveau de la première région de la partie fixe (10) et de la première région de la partie mobile (14) et dans la couche intermédiaire (102.3) lors de l'étape d) au niveau des électrodes mobiles (21) et de la seconde région de la partie mobile (10) pour assurer une isolation électrique des électrodes mobiles (21) lors de l'application de la tension d'actionnement vers une électrode mobile (21) via la première région de la partie fixe (14) et la première région de la partie mobile (10).

25. Procédé selon l'une des revendications 23 ou 24, dans lequel l'étape b) inclut la gravure de l'évidement (26) dans une partie centrale de la partie en retrait (201).

26. Procédé selon l'une des revendications 23 à 25, dans lequel l'étape b) est-suivie d'une étape de réalisation d'une couche de matériau isolant (203) sur le second substrat gravé (200).

27. Procédé selon l'une des revendications 23 à 26, **caractérisé en ce que** la seconde région de la partie mobile (10) réalise la zone réfléchissante (17).

28. Procédé selon l'une des revendications 23 à 26, **caractérisé en ce qu'**il comporte une étape de métallisation de la seconde région de la partie mobile 10) pour réaliser la zone réfléchissante (17).

29. Procédé selon l'une des revendications 23 à 28, dans lequel après l'assemblage, on retire la seconde couche isolante (102.2).

30. Procédé selon l'une des revendications 23 à 29, dans lequel la couche superficielle (103) est plus épaisse que la couche intermédiaire (102.3).

31. Procédé selon l'une des revendications 23 à 30, dans lequel le premier substrat (100) est un double substrat SOI et comporte du côté de la seconde couche isolante (102.2) une couche semi-conductrice de base (101) qui est ôtée après l'assemblage des deux substrats (100, 200).

32. Micro-lentille comprenant une partie mobile (10) avec une zone réfringente (17), une partie fixe (14), des moyens de liaison (13) de la partie mobile (10) à la partie fixe (14) matérialisant un axe de rotation (12) contenu dans la partie mobile (10), sensiblement parallèle à un plan principal de la partie mobile (10), et des moyens de commande électrique (18) de la rotation de la partie mobile (10) autour de l'axe (12), **caractérisé en ce que** les moyens de commande électrique (18) comportent deux actionneurs (19) ou plus, formés chacun d'une électrode fixe (20) solidaire de la partie fixe (14) et d'une électrode mobile (21) dotée d'une extrémité libre (21.1) et d'une extrémité reliée à un bras d'entraînement (23) sensiblement parallèle à l'axe (12) et issu de la partie mobile (10), l'électrode mobile (21) étant adaptée à se plaquer progressivement sur l'électrode fixe (20) depuis son extrémité libre (21.1) lorsqu'une tension d'actionnement (V1, V2) est appliquée entre les deux électrodes (20, 21) d'un des actionneurs (19), le plaquage se faisant sur une surface variable en fonction de la tension appliquée entre les électrodes de l'actionneur, les actionneurs (19) étant disposés de part et d'autre de l'axe (12).

33. Micro-lentille selon la revendication-32, dans laquelle les moyens de liaison de la partie mobile (10) à la partie fixe (14) sont deux bras de torsion (13) issus de la partie mobile (10) dont les extrémités (11) sont reliées à la partie fixe (14).

34. Micro-lentille selon l'une des revendications 32 ou 33, dans laquelle l'axe (12) passe par le centre géométrique de la partie mobile (10).

35. Micro-lentille selon l'une des revendications 33 ou 34, dans laquelle, d'un même côté de la partie mobile (10), un bras d'entraînement (23) est décalé par rapport à un bras de torsion (13).

36. Micro-lentille selon l'une des revendications 33 ou 34, dans laquelle, d'un même côté de la partie mobile (10), un bras d'entraînement (23) et un bras de torsion (13) sont dans le prolongement l'un de l'autre.

37. Micro-lentille selon la revendication 36, **caractérisée en ce que** le bras de torsion (13) a une section transversale inférieure à celle du bras d'entraînement (23).

38. Micro-lentille selon la revendication 36, **caractérisée en ce que** le bras de torsion (13) a une section transversale sensiblement égale à celle du bras d'entraînement (23).

39. Micro-lentille selon l'une des revendications 32 à 38, dans laquelle plusieurs électrodes mobiles (21) sont reliées à un même bras d'entraînement (23).

40. Micro-lentille selon l'une des revendications 32 à 38, dans laquelle chaque bras d'entraînement (23) est solidaire d'une seule électrode mobile (21).

41. Micro-lentille selon l'une des revendications 32 à 40, dans laquelle plusieurs électrodes mobiles (21) situées d'un même côté de l'axe (12) sont reliées entre elles au niveau de leur extrémité libre (21.1).

42. Micro-lentille selon l'une des revendications 32 à 41, dans laquelle au moins une électrode mobile (21) est enroulée sur elle-même, son extrémité libre (21.1) se trouvant dans une zone centrale de l'enroulement.

43. Micro-lentille selon l'une des revendications 32 à 41, dans laquelle au moins une électrode mobile (21) est sensiblement rectiligne.

44. Micro-lentille selon l'une des revendications 32 à 43, dans laquelle au moins une électrode mobile (21) comporte un corps (21.2) de largeur sensiblement constante se prolongeant par une amorce (21.3) au niveau de son extrémité libre (21.1), la largeur de l'amorce (21.3) étant plus grande que celle du corps (21.2).

45. Micro-lentille selon l'une des revendications 32 à 44, dans laquelle les électrodes fixes (20) des actionneurs (19) sont confondues.

46. Micro-lentille selon l'une des revendications 32 à 45, dans laquelle la partie fixe (14) comporte une base (16) et des montants (15) sur lesquels s'appuient les moyens de liaison (13), la partie mobile (10) étant suspendue au-dessus de la base (16).

47. Micro-lentille selon la revendication 46, dans laquelle la base (16) comporte un évidement (26) en regard de la partie mobile (10)qui est suspendue au-dessus de l'évidement (26).

48. Micro-lentille selon l'une des revendications 32 à 47, dans laquelle les électrodes fixes (20) sont recouvertes d'un matériau diélectrique (24).

49. Micro-lentille selon l'une des revendications 32 à 48, dans laquelle les moyens de commande électrique (18) comportent des moyens d'adressage (27) aptes à appliquer une tension d'actionnement (V1, V2) aux électrodes mobiles et/ou aux électrodes fixes.

50. Micro-lentille selon la revendication 49, dans laquelle la tension d'actionnement est une tension continue (V0) superposée à une tension de commande variable (V1', V2').

51. Micro-lentille selon la revendication 49, dans laquelle au moins une électrode fixe (20) d'un actionneur est morcelée en deux portions (20.1, 20.2) dont une portion d'extrémité (20.1), ces deux portions (20.1, 20.2) étant isolées l'une de l'autre, les moyens d'adressage (27) étant aptes à appliquer- une tension continue (V0) à la portion d'extrémité (20.1) et une tension de commande variable (V1', V2') à l'autre portion (20.2).

52. Micro-lentille selon l'une des revendications 50 ou 51, dans laquelle la tension continue (V0) est une tension minimale pour maintenir un plaquage de l'extrémité libre (21.1) de l'électrode mobile (21) de l'actionneur sur l'électrode fixe (20).

53. Micro-lentille selon l'une des revendications 50 à 52, dans laquelle, lorsque la tension de commande appliquée à un actionneur situé d'un côté de l'axe est non nulle, la tension de commande appliquée en même temps à un actionneur situé de l'autre côté de l'axe est nulle.

54. Procédé de réalisation d'une micro-lentille selon l'une des revendications 32 à 53, **caractérisé en ce qu'**il comporte les étapes suivantes :
a) gravure du contour d'une première région de la partie mobile (10), d'une première région de la partie fixe (14), d'une première région des bras d'entraînement (23), d'une première région des moyens de liaison (13), dans une couche superficielle (103) et une première couche isolante (102.2) d'un substrat stratifié (100) comportant un empilement alterné d'une première et une seconde couches (102.1, 102.2) en matériau isolant et de deux couches semi-conductrices (103, 102.3) dont une est intermédiaire (102.3) et l'autre superficielle (103),
b) dans un second substrat semi-conducteur (200) gravure d'une partie en retrait (201), ce second substrat (200) contribuant à réaliser une seconde région de la partie fixe (14) et les électrodes fixes (20) des actionneurs (19),
c) assemblage des deux substrats (100, 200), la partie en retrait (201) étant face à la couche superficielle (103) gravée,
d) gravure du contour des électrodes mobiles (21), d'une seconde région de la partie mobile (10), d' une seconde région des moyens de liaison (13), d'une seconde région des bras d'entraînement (23), dans la couche intermédiaire (102.3) et réalisation au préalable de métallisations (110, 111) reliées électriquement aux électrodes mobiles (21) pour l'application de la tension d'actionnement (V1, V2) de chaque actionneur (19) via la partie fixe (14) et la partie mobile (10)

55. Procédé selon la revendication 54, dans lequel on réalise des tranchées d'isolation (104, 105) lors de l'étape a) dans la couche superficielle (103) et la couche d'isolation supérieure (102.2) au niveau de la première région de la partie fixe (10) et de la première région de la partie mobile (14) et dans la couche intermédiaire (102.3) lors de l'étape d) au niveau des électrodes mobiles (21) et de la seconde région de la partie mobile (10) pour assurer une isolation électrique des électrodes mobiles (21) lors de l'application de la tension d'actionnement vers une électrode mobile (21) via la première région de la partie fixe (14) et la première région de la partie mobile (10).

56. Procédé selon l'une des revendications 54 ou 55, **caractérisé en ce que** l'étape b) inclut la gravure de moyens formant pivot (30.1) au niveau de la partie en retrait (201).

57. Procédé selon l'une des revendications 54 à 56, dans lequel l'étape b) inclut la gravure de l'évidement (26) dans une partie centrale de la partie en retrait (201).

58. Procédé selon l'une des revendications 54 à 57, dans lequel l'étape b) est suivie d'une étape de réalisation d'une couche de matériau isolant (203) sur le second substrat gravé (200).

59. Procédé selon l'une des revendications 54 à 58, **caractérisé en ce que** la partie mobile (10) est gravée en forme de cadre lors de l'étape b).

60. Procédé selon la revendication 59, **caractérisé en ce qu'**il comporte une étape d'assemblage d'une pièce réfringente lenticulaire au cadre de la partie mobile pour réaliser la zone réfringente (17).

61. Procédé selon l'une des revendications 54 à 60, dans lequel après l'assemblage de l'étape c), on retire la seconde couche isolante (102.2).

62. Procédé selon l'une des revendications 54 à 61, dans lequel la couche superficielle (103) est plus épaisse que la couche intermédiaire (102.3).

63. Procédé selon l'une des revendications 541 à 62, dans lequel le premier substrat (100) est un double substrat SOI et comporte du côté de la seconde couche isolante (102.2) une couche semi-conductrice de base (101) qui est ôtée après l'assemblage des deux substrats (100, 200).

## Claims

1. Micro-mirror made up of a moving part (110), with a reflective zone (17), a fixed part (14), a means of connection (13) of the moving part (10) to the fixed part (14), forming an axis of rotation (12) contained in the moving part (10) substantially parallel to a principal plane of the moving part (10) and means of electrical control (18) of the rotation of the moving part (10) about the axis (12), **characterized in that** the means of electrical control (18) include two or more actuators (19) each formed of a fixed electrode (20) which forms part of the fixed part (14) and a moving electrode (21) possessing a free end (21.1) and an end which is connected to a drive arm (23) which is substantially parallel to the axis (12) and emerging from the moving part (10), with the moving electrode (21) being suitable for adhering progressively to the fixed electrode (20) from its free end (21.1) when an actuation voltage (V1, V2) is applied between the two electrodes (20, 21) of one of the actuators (19), the adhesion occurs over a surface which varies as a function of the voltage applied between the electrodes of the actuator, with the actuators (19) being arranged on either side of the axis (12).

2. Micro-mirror according to claim 1, wherein the means of connection of the moving part (10) to the fixed part (14) are two torsion arms (13) emerging from the moving part (10) whose ends (11) are connected to the fixed part (14).

3. Micro-mirror according to either claim 1 or claim 2, wherein the axis (12) passes through the geometric centre of the moving part (10).

4. Micro-mirror according to either claim 2 or claim 3, wherein, on the same side of the moving part (10) a drive arm (23) is offset in relation to a torsion arm (13).

5. Micro-mirror according to either claim 2 or claim 3, wherein, on the same side of the moving part (10) a drive arm (23) and a torsion arm (13) are an extension of each other.

6. Micro-mirror according to claim 5, wherein the torsion arm (13) has a transverse section that is less than that of the drive arm (23).

7. Micro-mirror according to claim 5, wherein the torsion arm (13) has a transverse section that is substantially equal to that of the drive arm (23).

8. Micro-mirror according to any of claims 1 to 7, wherein several moving electrodes (21) are linked to the same drive arm (23).

9. Micro-mirror according to any of claims 1 to 7, wherein each drive arm (23) is integral with a single moving electrode (21).

10. Micro-mirror according to any of claims 1 to 9, wherein several moving electrodes (21) located on the same side of the axis (12) are linked together at their free end (21.1).

11. Micro-mirror according to any of claims 1 to 10, wherein at least one moving electrode (21) is wound on itself, with its free end (21.1) located in a central area of the winding.

12. Micro-mirror according to any of claims 1 to 10, wherein at least one moving electrode (21) is substantially rectilinear.

13. Micro-mirror according to any of claims 1 to 12, wherein at least one moving electrode (21) includes a body (21.2) of substantially constant width extending by means of a stub (21.3) at its free end (21.1), the width of the stub (21.3) being greater than that of the body (21.2).

14. Micro-mirror according to any of claims 1 to 13, wherein the fixed electrodes (20) of the actuators (19) are combined.

15. Micro-mirror according to any of claims 1 to 14, wherein the fixed part (14) includes a base (16) and columns (15) on which rest the means (13) of connection, with the moving part (10) being suspended above the base (16).

16. Micro-mirror according to claim 15, wherein the base (16) includes a cavity (26) opposite the moving part (10) which is suspended above the cavity (26).

17. Micro-mirror according to any of claims 1 to 16, wherein the fixed electrodes (20) are covered with a dielectric material (24).

18. Micro-mirror according to any of claims 1 to 17, wherein the means of electrical control (18) include an addressing device (27) capable of applying an actuation voltage (V1, V2) to the moving electrodes and/or the fixed electrodes.

19. Micro-mirror according to claim 18, wherein the actuation voltage is a continuous voltage (V0) added to a variable control voltage (V1', V2').

20. Micro-mirror according to claim 18, wherein at least one fixed electrode (20) of an actuator is divided into two portions (20.1, 20.2) one of which is an end portion (20.1), with these two portions (20.1, 20.2) being insulated from each other, with the addressing device (27) being capable of applying a continuous voltage (V0) to the end portion (21.1) and a variable control voltage (V1', V2') to the other portion (20.2).

21. Micro-mirror according to either claim 19 or claim 20, wherein the continuous voltage (V0) is a minimal voltage for maintaining adhesion of the free end (21.1) of the moving electrode (21) of the actuator onto the fixed electrode (20).

22. Micro-mirror according to any of claims 19 to 21, wherein when the control voltage applied to an actuator located on one side of the axis is non-zero, the control voltage applied at the same time to an actuator located on the other side of the axis is zero.

23. Process for the manufacture of a micro-mirror according to claims 1 to 22, wherein it includes the following steps:
a) etching of the outline of a first region of the moving part (1), of a first region of the fixed part (14), a first region of the drive arms (23) and of a first region of the means (13) of connection in a surface layer (103) and a first insulating layer (102.2) of a stratified substrate (100) made up of an alternating stacking of a first and second layer (102.1, 102.2) of insulating material and two semi-conductive layers (103, 102.3) one of which is intermediate (102.3) and the other of which is a surface layer (103).
b) in a second semi-conductive substrate (200) the etching of a recessed part (201), with this second substrate (200) contributing to the formation of a second region of the fixed part (14) and the fixed electrodes (20) of the actuators (19),
c) assembly of two substrates (100, 200) with the recessed part (201) facing the etched surface layer,
d) etching of the outline of the moving electrodes (21), of a second region of the moving part (10), a second region of the means of connection (13) and of a second region of the drive arms (23), in the intermediate layer (102.3) and prior metallization (110,111) electrically connected to moving electrodes (21) for the application of the actuation voltage (V1, V2) of each actuator (19) via the fixed part (14) and the moving part (10).

24. Process according to claim 23, wherein trenches of insulation (104, 105) are made during step a) in the surface layer (103) and in the upper insulation layer (102.2) at the first region of the fixed part (10) and the first region of the moving part (14) and in the intermediate layer (102.3) during step d) at the moving electrodes (21) and the second region of the moving part (10) to provide electrical insulation of the moving electrodes (21) during the application of actuation voltage to a moving electrode (21) via the first region of the fixed part (14) and the first region of the moving part (10).

25. Process according to either claim 23 or claim 24, wherein step b) includes the etching of the cavity (26) in a central part of the recessed part (201).

26. Process according to any of claims 23 to 25, wherein step b) is followed by a step for the creation of a layer of insulating material (203) on the second etched substrate (200).

27. Process according to any of claims 23 to 26, wherein the second region of the moving part (10) forms the reflective zone (17).

28. Process according to any of claims 23 to 26, wherein it includes a step for metallization of the second region of the moving part (10) in order to form the reflective zone (17).

29. Process according to any of claims 23 to 28, wherein, after assembly, the second insulating layer (102.2) is removed.

30. Process according to any of claims 23 to 29, wherein the surface layer (103) is thicker than the intermediate layer (102.3).

31. Process according to any of claims 23 to 30, wherein the first substrate is a double SOI substrate and includes next to the second insulating layer (102.2) a semi-conductive base layer (101) which is removed after assembly of the two substrates (100, 200).

32. Micro-lens made up of a moving part (10), with a refringent zone (17), a fixed part (14) a means of connection (13) of the moving part (10) to the fixed part (14), forming an axis of rotation (12) contained in the moving part (10) substantially parallel to a principal plane of the moving part (10), and means of electrical control (18) of the rotation of the moving part (10) about the axis (12) **characterized in that** the means of electrical control (18) include two or more actuators (19) each formed of a fixed electrode (20) which forms part of the fixed part (14) and a moving electrode (21) possessing a free end (21.1) and an end which is connected to a drive arm (23) which is substantially parallel to the axis (12) and emerging from the moving part (10), with the moving electrode (21) being suitable for adhering progressively to the fixed electrode (20) from its free end (21.1) when an actuation voltage (V1, V2) is applied between the two electrodes (20, 21) of one of the actuators (19), the adhesion occuring over a surface which varies as a function of the voltage applied between the electrodes of the actuator, with the actuators (19) being arranged on either side of the axis (12).

33. Micro-lens according to claim 32, wherein the means of connection of the moving part (10) to the fixed part (14) are two torsion arms (13) emerging from the moving part (10) whose ends (11) are connected to the fixed part (14).

34. Micro-lens according to either claim 32 or claim 33, wherein the axis (12) passes through the geometric centre of the moving part (10).

35. Micro-lens according to either claim 33 or claim 34, wherein, on the same side of the moving part (10) a drive arm (23) is offset in relation to a torsion arm (13).

36. Micro-lens according to either claim 33 or claim 34, wherein, on the same side of the moving part (10) a drive arm (23) and a torsion arm (13) form an extension of each other.

37. Micro-lens according to claim 36, wherein the torsion arm (13) has a transverse section that is less than that of the drive arm (23).

38. Micro-lens according to claim 36, wherein the torsion arm (13) has a transverse section that is substantially equal to that of the drive arm (23).

39. Micro-lens according to any of claims 32 to 38, wherein several moving electrodes (21) are linked to the same drive arm (23).

40. Micro-lens according to any of claims 32 to 38, wherein each drive arm (23) is integral with a single moving electrode (21).

41. Micro-lens according to any of claims 32 to 40, wherein several moving electrodes (21) located on the same side of the axis (12) are linked together at their free end (21.1).

42. Micro-lens according to any of claims 32 to 41, wherein at least one moving electrode (21) is wound on itself, with its free end (21.1) located in a central area of the winding.

43. Micro-lens according to any of claims 32 to 41, wherein at least one moving electrode (21) is substantially rectilinear.

44. Micro-lens according to any of claims 32 to 43, wherein at least one moving electrode (21) includes a body (21.2) of substantially constant width extending by means of a stub (21.3) at its free end (21.1), the width of the stub (21.3) being greater than that of the body (21.2).

45. Micro-lens according to any of claims 32 to 44, wherein the fixed electrodes (20) of the actuators (19) are combined.

46. Micro-lens according to any of claims 32 to 45, wherein the fixed part (14) includes a base (16) and columns (15) on which the means (13) of connection (13) rest, with the moving part (10) being suspended above the base (16).

47. Micro-lens according to claim 46, wherein the base (16) includes a cavity (26) opposite the moving part (10) which is suspended above the cavity (26).

48. Micro-lens according to any of claims 32 to 47, wherein the fixed electrodes (20) are covered with a dielectric material (24).

49. Micro-lens according to any of claims 32 to 48, wherein the means of electrical control (18) include an addressing device (27) capable of applying an actuation voltage (V1, V2) to the moving electrodes and/or the fixed electrodes.

50. Micro-lens according to claim 49, wherein the actuation voltage is a continuous voltage (V0) added to a variable control voltage (V1', V2').

51. Micro-lens according to claim 49, wherein at least one fixed electrode (20) of an actuator is divided into two portions (20.1, 20.2) one of which is an end portion (20.1), with these two portions (20.1, 20.2) being insulated from each other, with the addressing device (27) being capable of applying a continuous voltage (V0) to the end portion (21.1) and a variable control voltage (V1', V2') to the other portion (20.2).

52. Micro-lens according to either claim 50 or claim 51, wherein the continuous voltage (V0) is a minimal voltage for maintaining adhesion of the fee end (21.1) of the moving electrode (21) of the actuator onto the fixed electrode (20).

53. Micro-lens according to any of claims 50 to 52, wherein, when the control voltage applied to an actuator located on one side of the axis is non-zero, the control voltage applied at the same time to an actuator located on the other side of the axis is zero.

54. Process for the manufacture of a micro-lens as described in any of claims 32 to 53, wherein it includes the following steps:
a) etching of the outline of a first region of the moving part (10), of a first region of the fixed part (14), of a first region of the drive arms (23) and of a first region of the means (13) of connection in a surface layer (103) and a first insulating layer (102.2) of a stratified substrate (100) made up of an alternating stacking of a first and second layer (102.1, 102.2) of insulating material and two semi-conductive layers (103, 102.3) one of which is intermediate (102.3) and the other of which is a surface layer (103),
b) in a second semi-conductive substrate (200) the etching of a recessed part (201), with this second substrate (200) helping to form a second region of the fixed part (14) and the fixed electrodes (20) of the actuators (19),
c) assembly of two substrates (100, 200) with the recessed part (201) facing the etched surface layer,
d) etching of the outline of the moving electrodes (21), of a second region of the moving part (10), a second region of the means of connection (13) and of a second region of the drive arms (23), in the intermediate layer (102.3) and prior metallization (110,111) electrically connected to moving electrodes (21) for the application of the actuation voltage (V1, V2) of each actuator (19) via the fixed part (14) and the moving part (10).

55. Process according to claim 54, wherein trenches of insulation (104, 105) are made during step a) in the surface layer (103) and in the upper insulation layer (102.2) at the first region of the fixed part (10) and the first region of the moving part (14) and in the intermediate layer (102.3) during step d) at the moving electrodes (21) and of the second region of the moving part (10) to provide electrical insulation of the moving electrodes (21) during the application of actuation voltage to a moving electrode (21) via the first region of the fixed part (14) and the first region of the moving part (10).

56. Process according to either claim 54 or claim 55, wherein step b) includes the etching of the means forming the pivot (30.1) in the recessed part (201).

57. Process according to any of claims 54 to 56, wherein step b) includes the etching of the cavity (26) in a central part of the recessed part (201).

58. Process according to any of claims 54 to 57, wherein step b) is followed by a step for the creation of a layer of insulating material (203) on the second etched substrate (200).

59. Process according to any of claims 54 to 58, wherein the moving part (10) is etched in the form of a frame during step b).

60. Process according to claim 59, wherein it includes a step for assembly of a lenticular refringent element to the frame of the moving part in order to form the refringent zone (17).

61. Process according to any of claims 54 to 60, wherein, after assembly in step c), the second insulating layer (102.2) is removed.

62. Process according to any of claims 54 to 61, wherein the surface layer (103) is thicker than the intermediate layer (102.3).

63. Process according to any of claims 54 to 62, wherein the first substrate (100) is a double SOI substrate and includes next to the second insulating layer (102.2) a semi-conductive base layer (101) which is removed after assembly of the two substrates (100, 200).

## Patentansprüche

1. Mikrospiegel mit einem eine Reflexionszone (17) umfassenden beweglichen Teil (10), einem festen Teil (14) und Verbindungseinrichtungen (13) des beweglichen Teils (10) mit dem festen Teil (14), eine in dem beweglichen Teil (10) enthaltene Rotationsachse (12) materialisierend, im wesentlichen parallel zu einer Hauptebene des beweglichen Teils (10), und elektrischen Einrichtungen (18) zu Steuerung der Rotation des beweglichen Teils (10) um die Achse (12),
**dadurch gekennzeichnet, dass** die elektrischen Steuerungseinrichtungen (18) zwei oder mehr Aktoren (19) umfassen, jeder gebildet durch eine feste Elektrode (20), fest verbunden mit dem festen Teil (14), und einer beweglichen Elektrode (21) mit einem freien Ende (21.1) und einem Ende, das mit einem Antriebsarm (23) verbunden ist, der im wesentlichen parallel ist zu der Achse (12) und aus einem Stück ist mit dem beweglichen Teil (10), wobei die bewegliche Elektrode (21) fähig ist, sich von ihrem freien Ende (21.1) aus progressiv an die feste Elektrode (20) zu schmiegen, wenn zwischen den beiden Elektroden (20, 21) eines der Aktoren (19) eine Betätigungsspannung (V1, V2) angelegt wird, und das Anschmiegen über eine variable Fläche erfolgt, in Abhängigkeit von der zwischen den Elektroden des Aktors angelegten Spannung, wobei die Aktoren beiderseits der Achse (12) angeordnet sind.

2. Mikrospiegel nach Anspruch 1, bei dem die Verbindungseinrichtungen des beweglichen Teils (10) mit dem festen Teil (14) zwei Torsionsarme (13) sind, die aus einem Stück mit dem beweglichen Teil (10) sind und deren Enden (11) mit dem festen Teil (14) verbunden sind.

3. Mikrospiegel nach einem der Ansprüche 1 oder 2, bei dem die Achse (12) durch den geometrischen Mittelpunkt des beweglichen Teils (10) verläuft.

4. Mikrospiegel nach einem der Ansprüche 2 oder 3, bei dem auf einer selben Seite des beweglichen Teils (10) ein Antriebsarm (23) versetzt ist in Bezug auf einen Torsionsarm (13).

5. Mikrospiegel nach einem der Ansprüche 2 oder 3, bei dem eine selbe Seite des beweglichen Teils (10) einen Antriebsarm (23) und einen Torsionsarm (13) aufweist, von denen sich der eine jeweils in der Verlängerung des anderen befindet.

6. Mikrospiegel nach Anspruch 5, bei dem der Torsionsarm (13) einen kleineren Querschnitt hat als der Antriebsarm (23).

7. Mikrospiegel nach Anspruch 5, bei dem der Torsionsarm (13) einen in etwa gleichen Querschnitt hat wie der Antriebsarm (23).

8. Mikrospiegel nach einem der Ansprüche 1 bis 7, bei dem mehrere bewegliche Elektroden (21) mit einem selben Antriebsarm (23) verbunden sind.

9. Mikrospiegel nach einem der Ansprüche 1 bis 7, bei dem jeder Antriebsarm (23) mit einer einzigen beweglichen Elektrode (21) verbunden ist.

10. Mikrospiegel nach einem der Ansprüche 1 bis 9, bei dem mehrere auf einer selben Seite der Achse (12) befindliche bewegliche Elektroden (21) in Höhe ihres freien Endes (21.1) miteinander verbunden sind.

11. Mikrospiegel nach einem der Ansprüche 1 bis 10, bei dem wenigstens eine bewegliche Elektrode (21) um sich selbst gewickelt ist, wobei ihr freies Ende (21.1) sich in einer zentralen Zone der Wicklung befindet.

12. Mikrospiegel nach einem der Ansprüche 1 bis 10, bei dem wenigstens eine bewegliche Elektrode (21) im wesentlichen geradlinig ist.

13. Mikrospiegel nach einem der Ansprüche 1 bis 12, bei dem wenigstens eine bewegliche Elektrode (21) einen Rumpfteil (21.2) von im wesentlichen konstanter Breite hat, der an seinem freien Ende (21.1) durch einen Einleitungsteil (21.3) verlängert wird, wobei die Breite des Einleitungsteils (21.3) größer ist als die des Rumpfteils (21.2).

14. Mikrospiegel nach einem der Ansprüche 1 bis 13, bei dem die festen Elektroden (20) der Aktoren (19) zusammenfallen.

15. Mikrospiegel nach einem der Ansprüche 1 bis 14, bei dem der feste Teil (14) eine Basis (16) und vertikale Stützen (15) umfasst, an denen sich die Verbindungseinrichtungen (13) abstützen, so dass der mobile Teil (10) über der Basis (16) aufgehängt ist.

16. Mikrospiegel nach Anspruch 15, bei dem die Basis (16) eine Vertiefung (26) gegenüber dem über ihr aufgehängten beweglichen Teil (10) umfasst.

17. Mikrospiegel nach einem der Ansprüche 1 bis 16, bei dem die festen Elektroden (20) mit einem dielektrischen Material (24) überzogen sind.

18. Mikrospiegel nach einem der Ansprüche 1 bis 17, bei dem die elektrischen Steuerungseinrichtungen (18) Ansteuerungseinrichtungen (27) umfassen, fähig eine Betätigungsspannung (V1, V2) an die beweglichen und/oder festen Elektroden zu legen.

19. Mikrospiegel nach Anspruch 18, bei dem die Betätigungsspannung eine einer variablen Steuerspannung (V1', V'2) überlagerte Gleichstromspannung (V0) ist.

20. Mikrospiegel nach Anspruch 18, bei dem mindestens eine feste Elektrode (20) eines Aktors in zwei Teilstücke (20.1, 20.2) aufgeteilt ist, wovon eines (20.1) das Endteilstück ist und diese beiden Teilstücke (20.1, 20.2) voneinander isoliert sind, wobei die Ansteuerungseinrichtungen (27) fähig sind, an das Endteilstück (20.1) eine Gleichspannung (V0) anzulegen und an das andere Teilstück (20.2) eine variable Spannung (V1', V2').

21. Mikroschalter nach einem der Ansprüche 19 oder 20, bei dem die Gleichspannung (V0) eine Minimalspannung ist, um eine Anschmiegung des freien Endes (21.1) der beweglichen Elektrode (21) des Aktors auf der festen Elektrode (20) aufrechtzuerhalten.

22. Mikroschalter nach einem der Ansprüche 19 bis 21, bei dem - wenn die an einen auf einer Seite der Achse befindlichen Aktor angelegte Steuerspannung nicht null ist -, die gleichzeitig an einen auf der anderen Seite der Achse befindlichen Aktor angelegte Steuerspannung null ist.

23. Verfahren zur Realisierung eines Mikroschalters nach einem der Ansprüche 1 bis 22, **dadurch gekennzeichnet, dass** es die folgenden Schritte umfasst:
a) Ätzen der Kontur eines ersten Bereichs des beweglichen Teils (10), eines ersten Bereichs des festen Teils (14), eines ersten Bereichs des Antriebsarms (23) und eines ersten Bereichs der Verbindungseinrichtungen (13) in einer Oberflächenschicht (103) und einer ersten Isolierschicht (102.2) eines Mehrschichtsubstrats (100), das einen alternierenden Stapel aus einer ersten und einer zweiten Isolierschicht (102.1, 102.2) und zwei Halbleiterschichten (103, 102.3) umfasst, von denen die eine eine Zwischenschicht (102.3) und die andere die Oberflächenschicht (103) ist;
b) Ätzen - in einem zweiten Halbleitersubstrat (200) - eines Rücksprungteils (201), wobei dieses zweite Substrat (200) beiträgt zur Realisierung eines zweiten Bereichs des festen Teils (14) und der festen Elektroden (20) der Aktoren (19);
c) Zusammenbau der beiden Substrate (100, 200), wobei der Rücksprungteil (201) der geätzten Oberflächenschicht (103) gegenübersteht;
d) Ätzen der Kontur der beweglichen Elektroden (21), eines zweiten Bereichs des beweglichen Teils (10), eines zweiten Bereichs der Verbindungseinrichtungen (13), eines zweiten Bereichs der Antriebsarme (23) in der Zwischenschicht (102.3) und Vorabrealisierung der elektrisch mit den beweglichen Elektroden (21) verbundenen Metallisierungen (110, 111) zum Anlegen der Betätigungsspannung (V1, V2) jedes Aktors (19) über den festen Teil (14) und den beweglichen Teil (10).

24. Verfahren nach Anspruch 23, bei dem man Isolationsgräben (104, 105) realisiert, in Schritt a) in der Oberflächenschicht (103) und der oberen Isolierschicht (102.1) in Höhe des ersten Bereichs des festen Teils (10) und des ersten Bereichs des beweglichen Teils (14), und in Schritt b) in der Zwischenschicht (102.3) in Höhe der beweglichen Elektroden (21) und dem zweiten Bereich des beweglichen Teils (10), um beim Anlegen der Betätigungsspannung an eine bewegliche Elektrode (21) über den ersten Bereich des festen Teils (14) und den ersten Bereich des beweglichen Teils (10) eine elektrische Isolation der beweglichen Elektroden (21) zu gewährleisten.

25. Verfahren nach einem der Ansprüche 23 oder 24, in dem der Schritt b) das Ätzen der Vertiefung (26) in einem zentralen Teil des Rücksprungteils (201) umfasst.

26. Verfahren nach einem der Ansprüche 23 bis 25, in dem auf den Schritt b) ein Schritt zur Realisierung einer Schicht aus Isoliermaterial (203) auf dem zweiten geätzten Substrat (200) folgt.

27. Verfahren nach einem der Ansprüche 23 bis 26, **dadurch gekennzeichnet, dass** der zweite Bereich des beweglichen Teils (10) die Reflexionszone (17) realisiert.

28. Verfahren nach einem der Ansprüche 23 bis 26, **dadurch gekennzeichnet, dass** es einen Schritt zu Metallisierung des zweiten Bereichs des beweglichen Bereichs (10) umfasst, um die Reflexionszone (17) zu realisieren.

29. Verfahren nach einem der Ansprüche 23 bis 28, bei dem man nach dem Zusammenbau die zweite Isolierschicht (102.2) entfernt.

30. Verfahren nach einem der Ansprüche 23 bis 29, bei dem die Oberflächenschicht (103) dicker ist als die Zwischenschicht (102.3).

31. Verfahren nach einem der Ansprüche 23 bis 30, bei dem das erste Substrat (100) ein SOI-Doppelsubstrat ist und auf der Seite der zweiten Isolierschicht (102.2) eine Basishalbleiterschicht (101) umfasst, die nach dem Zusammenbau der beiden Substrate (100, 200) eliminiert wird.

32. Mikrolinse mit einem eine Reflexionszone (17) umfassenden beweglichen Teil (10), einem festen Teil (14) und Verbindungseinrichtungen (13) des beweglichen Teils (10) mit dem festen Teil (14), eine in dem beweglichen Teil (10) enthaltene Rotationsachse (12) materialisierend, im wesentlichen parallel zu einer Hauptebene des beweglichen Teils (10), und elektrischen Einrichtungen (18) zu Steuerung der Rotation des beweglichen Teils (10) um die Achse (12), **dadurch gekennzeichnet, dass** die elektrischen Steuerungseinrichtungen (18) zwei oder mehr Aktoren (19) umfassen, jeder gebildet durch eine feste Elektrode (20), fest verbunden mit dem festen Teil (14), und einer beweglichen Elektrode (21) mit einem freien Ende (21.1) und einem Ende, das mit einem Antriebsarm (23) verbunden ist, der im wesentlichen parallel ist zu der Achse (12) und aus einem Stück ist mit dem beweglichen Teil (10), wobei die bewegliche Elektrode (21) fähig ist, sich von ihrem freien Ende (21.1) aus progressiv an die feste Elektrode (20) zu schmiegen, wenn zwischen den beiden Elektroden (20, 21) eines der Aktoren (19) eine Betätigungsspannung (V1, V2) angelegt wird, und das Anschmiegen über eine variable Fläche erfolgt, in Abhängigkeit von der zwischen den Elektroden des Aktors angelegten Spannung, wobei die Aktoren beiderseits der Achse (12) angeordnet sind.

33. Mikrospiegel nach Anspruch 32, bei dem die Verbindungseinrichtungen des beweglichen Teils (10) mit dem festen Teil (14) zwei Torsionsarme (13) sind, die aus einem Stück mit dem beweglichen Teil (10) sind und deren Enden (11) mit dem festen Teil (14) verbunden sind.

34. Mikrospiegel nach einem der Ansprüche 32 oder 33, bei dem die Achse (12) durch den geometrischen Mittelpunkt des beweglichen Teils (10) verläuft.

35. Mikrospiegel nach einem der Ansprüche 33 oder 34, bei dem auf einer selben Seite des beweglichen Teils (10) ein Antriebsarm (23) versetzt ist in Bezug auf einen Torsionsarm (13).

36. Mikrospiegel nach einem der Ansprüche 33 oder 34, bei dem eine selbe Seite des beweglichen Teils (10) einen Antriebsarm (23) und einen Torsionsarm (13) aufweist, von denen sich der eine jeweils in der Verlängerung des anderen befindet.

37. Mikrospiegel nach Anspruch 36, bei dem der Torsionsarm (13) einen kleineren Querschnitt hat als der Antriebsarm (23).

38. Mikrospiegel nach Anspruch 36, bei dem der Torsionsarm (13) einen in etwa gleichen Querschnitt hat wie der Antriebsarm (23).

39. Mikrospiegel nach einem der Ansprüche 32 bis 38, bei dem mehrere bewegliche Elektroden (21) mit einem selben Antriebsarm (23) verbunden sind.

40. Mikrospiegel nach einem der Ansprüche 32 bis 38, bei dem jeder Antriebsarm (23) mit einer einzigen beweglichen Elektrode (21) verbunden ist.

41. Mikrospiegel nach einem der Ansprüche 32 bis 40, bei dem mehrere auf einer selben Seite der Achse (12) befindliche bewegliche Elektroden (21) in Höhe ihres freien Endes (21.1) miteinander verbunden sind.

42. Mikrospiegel nach einem der Ansprüche 32 bis 41, bei dem wenigstens eine bewegliche Elektrode (21) um sich selbst gewickelt ist, wobei ihr freies Ende (21.1) sich in einer zentralen Zone der Wicklung befindet.

43. Mikrospiegel nach einem der Ansprüche 32 bis 41, bei dem wenigstens eine bewegliche Elektrode (21) im wesentlichen geradlinig ist.

44. Mikrospiegel nach einem der Ansprüche 32 bis 43, bei dem wenigstens eine bewegliche Elektrode (21) einen Rumpfteil (21.2) von im wesentlichen konstanter Breite hat, der an seinem freien Ende (21.1) durch einen Einleitungsteil (21.3) verlängert wird, wobei die Breite des Einleitungsteils (21.3) größer ist als die des Rumpfteils (21.2).

45. Mikrospiegel nach einem der Ansprüche 32 bis 44, bei dem die festen Elektroden (20) der Aktoren (19) zusammenfallen.

46. Mikrospiegel nach einem der Ansprüche 32 bis 45, bei dem der feste Teil (14) eine Basis (16) und vertikale Stützen (15) umfasst, an denen sich die Verbindungseinrichtungen (13) abstützen, so dass der mobile Teil (10) über der Basis (16) aufgehängt ist.

47. Mikrospiegel nach Anspruch 46, bei dem die Basis (16) eine Vertiefung (26) gegenüber dem über ihr aufgehängten beweglichen Teil (10) umfasst.

48. Mikrospiegel nach einem der Ansprüche 32 bis 47, bei dem die festen Elektroden (20) mit einem dielektrischen Material (24) überzogen sind.

49. Mikrospiegel nach einem der Ansprüche 32 bis 48, bei dem die elektrischen Steuerungseinrichtungen (18) Ansteuerungseinrichtungen (27) umfassen, fähig eine Betätigungsspannung (V1, V2) an die beweglichen und/oder festen Elektroden zu legen.

50. Mikrospiegel nach Anspruch 49, bei dem die Betätigungsspannung eine einer variablen Steuerspannung (V1', V'2) überlagerte Gleichstromspannung (V0) ist.

51. Mikrospiegel nach Anspruch 49, bei dem mindestens eine feste Elektrode (20) eines Aktors in zwei Teilstücke (20.1, 20.2) aufgeteilt ist, wovon eines (20.1) das Endteilstück ist und diese beiden Teilstücke (20.1, 20.2) voneinander isoliert sind, wobei die Ansteuerungseinrichtungen (27) fähig sind, an das Endteilstück (20.1) eine Gleichspannung (V0) anzulegen und an das andere Teilstück (20.2) eine variable Spannung (V1', V2').

52. Mikroschalter nach einem der Ansprüche 50 oder 51, bei dem die Gleichspannung (V0) eine Minimalspannung ist, um eine Anschmiegung des freien Endes (21.1) der beweglichen Elektrode (21) des Aktors auf der festen Elektrode (20) aufrechtzuerhalten.

53. Mikroschalter nach einem der Ansprüche 50 bis 52, bei dem - wenn die an einen auf einer Seite der Achse befindlichen Aktor angelegte Steuerspannung nicht null ist -, die gleichzeitig an einen auf der anderen Seite der Achse befindlichen Aktor angelegte Steuerspannung null ist.

54. Verfahren zur Realisierung eines Mikroschalters nach einem der Ansprüche 32 bis 53, **dadurch gekennzeichnet, dass** es die folgenden Schritte umfasst:
a) Ätzen der Kontur eines ersten Bereichs des beweglichen Teils (10), eines ersten Bereichs des festen Teils (14), eines ersten Bereichs des Antriebsarms (23) und eines ersten Bereichs der Verbindungseinrichtungen (13) in einer Oberflächenschicht (103) und einer ersten Isolierschicht (102.2) eines Mehrschichtsubstrats (100), das einen alternierenden Stapel aus einer ersten und einer zweiten Isolierschicht (102.1, 102.2) und zwei Halbleiterschichten (103, 102.3) umfasst, von denen die eine eine Zwischenschicht (102.3) und die andere die Oberflächenschicht (103) ist;
b) Ätzen - in einem zweiten Halbleitersubstrat (200) - eines Rücksprungteils (201), wobei dieses zweite Substrat (200) beiträgt zur Realisierung eines zweiten Bereichs des festen Teils (14) und der festen Elektroden (20) der Aktoren (19);
c) Zusammenbau der beiden Substrate (100, 200), wobei der Rücksprungteil (201) der geätzten Oberflächenschicht (103) gegenübersteht;
d) Ätzen der Kontur der beweglichen Elektroden (21), eines zweiten Bereichs des beweglichen Teils (10), eines zweiten Bereichs der Verbindungseinrichtungen (13), eines zweiten Bereichs der Antriebsarme (23) in der Zwischenschicht (102.3) und Vorabrealisierung der elektrisch mit den beweglichen Elektroden (21) verbundenen Metallisierungen (110, 111) zum Anlegen der Betätigungsspannung (V1, V2) jedes Aktors (19) über den festen Teil (14) und den beweglichen Teil (10).

55. Verfahren nach Anspruch 54, bei dem man Isolationsgräben (104, 105) realisiert, in Schritt a) in der Oberflächenschicht (103) und der oberen Isolierschicht (102.1) in Höhe des ersten Bereichs des festen Teils (10) und des ersten Bereichs des beweglichen Teils (14), und in Schritt b) in der Zwischenschicht (102.3) in Höhe der beweglichen Elektroden (21) und dem zweiten Bereich des beweglichen Teils (10), um beim Anlegen der Betätigungsspannung an eine bewegliche Elektrode (21) über den ersten Bereich des festen Teils (14) und den ersten Bereich des beweglichen Teils (10) eine elektrische Isolation der beweglichen Elektroden (21) zu gewährleisten.

56. Verfahren nach einem der Ansprüche 54 oder 55, **dadurch gekennzeichnet, dass** der Schritt b) das Ätzen von gelenkbildenden Einrichtungen (30.1) in Höhe des Rücksprungteils (201) umfasst.

57. Verfahren nach einem der Ansprüche 54 bis 56, in dem der Schritt b) das Ätzen der Vertiefung (26) in einem zentralen Teil des Rücksprungteils (201) umfasst.

58. Verfahren nach einem der Ansprüche 54 bis 57, in dem auf den Schritt b) ein Schritt zur Realisierung einer Schicht aus Isoliermaterial (203) auf dem zweiten geätzten Substrat (200) folgt.

59. Verfahren nach einem der Ansprüche 54 bis 58, **dadurch gekennzeichnet, dass** der bewegliche Teil (10) während des Schritts b) in Form eines Rahmens geätzt wird.

60. Verfahren nach Anspruch 59, **dadurch gekennzeichnet, dass** es einen Schritt des Zusammenbaus eines linsenförmigen lichtbrechenden Teils mit dem Rahmen des beweglichen Teils umfasst, um die lichtbrechende Zone (17) zu realisieren.

61. Verfahren nach einem der Ansprüche 54 bis 60, bei dem man nach dem Zusammenbau die zweite Isolierschicht (102.2) entfernt.

62. Verfahren nach einem der Ansprüche 54 bis 61, bei dem die Oberflächenschicht (103) dicker ist als die Zwischenschicht (102.3).

63. Verfahren nach einem der Ansprüche 54 bis 62, bei dem das erste Substrat (100) ein SOI-Doppelsubstrat ist und auf der Seite der zweiten Isolierschicht (102.2) eine Basishalbleiterschicht (101) umfasst, die nach dem Zusammenbau der beiden Substrate (100, 200) eliminiert wird.
